# EUROPEAN PATENT SPECIFICATION

(11) **EP 3 087 194 B1**
(45) Date of publication and mention of the grant of the patent: **16.06.2021**
(21) Application number: 14874631.6
(22) Date of filing: 11.12.2014
(51) Int. Cl.: G01N 1/28, B01L 3/00, C12Q 1/02, G01N 15/10, G01N 21/64, G01N 1/40

(54) **DEVICES AND METHODS FOR PROCESSING A BIOLOGICAL SAMPLE**
VORRICHTUNGEN UND VERFAHREN ZUR VERARBEITUNG EINER BIOLOGISCHEN PROBE
DISPOSITIFS ET PROCÉDÉS DE TRAITEMENT D'UN ÉCHANTILLON BIOLOGIQUE

(30) Priority: 23.12.2013 US 201361920394 P
(43) Date of publication of application: 02.11.2016
(73) Proprietor: Becton, Dickinson and Company, Franklin Lakes, NJ 07417-1880 (US)
(72) Inventor: WARNER, Brian David, Martinez California 94553 (US); YU, Liping, San Jose California 95124 (US); GHANEKAR, Smita, Fremont California 94536 (US); CAO, Jianying, San Jose California 95131 (US)
(74) Representative: Duxbury, Stephen
(86) International application number: PCT/US2014/069835
(87) International publication number: WO 2015/100028

(56) References cited:
- WO-A1-2008/147530
- US-A1- 2004 264 293
- US-A1- 2009 317 884
- US-A1- 2010 009 333
- US-A1- 2012 304 749
- US-A1- 2013 116 459
- THOMAS LAURELL ET AL: "Chip integrated strategies for acoustic separation and manipulation of cells and particles", CHEMICAL SOCIETY REVIEWS,, vol. 36, no. 3, 1 March 2007 (2007-03-01), pages 492-506, XP008117651, ISSN: 0306-0012, DOI: 10.1039/B601326K
- MARENTIS T C ET AL: "Microfluidic sonicator for real-time disruption of eukaryotic cells and bacterial spores for DNA analysis", ULTRASOUND IN MEDICINE AND BIOLOGY, NEW YORK, NY, US, vol. 31, no. 9, 1 September 2005 (2005-09-01), pages 1265-1277, XP027605632, ISSN: 0301-5629 [retrieved on 2005-09-01]
- LAURELL ET AL.: 'Chip integrated strategies for acoustic separation and manipulation of cells and particles' CHEMICAL SOCIETY REVIEWS vol. 36, no. 3, 01 March 2007, pages 492 - 506, XP008117651 DOI: 10.1039/B601326K

## Description

### CROSS-REFERENCE TO RELATED APPLICATIONS

Pursuant to 35 U.S.C. § 119 (e), this application claims priority to the filing date of the United States Provisional Patent Application Serial No. 61/920,394, filed December 23, 2013.

### INTRODUCTION

Flow cytometry is increasingly being used in disease diagnosis and monitoring, such as for prenatal and neonatal diagnosis of immunological abnormalities. Cells used in flow cytometry often must be washed and concentrated prior to use. This generally entails a manual step involving centrifugation, which may be time consuming, damage the cells, or lead to aggregation of the cells in the sample. Further, because the cells often sit for extended periods of time, the likelihood of cells forming aggregates is high.

Processing a biological sample to obtain single cells from cell aggregates, tissues or organs is often necessary for many laboratory tests. Tissue disaggregation and breaking up clumps of cells can often requires laborious purification and separation protocols in order to separate disaggregated cells from tissue and other biological material which requires further processing. Likewise, time required to process certain sample types (e.g., healthy tissues) may require a different extent of disaggregation than others (e.g., cancerous or necrotic tissue), making disaggregation of complex biological samples difficult and inefficient. Long periods of mechanical disaggregation or enzymatic treatment can be deleterious to the biological sample, with losses of cell viability to over-processing.

US 2013/0116459 A1 discloses a method and apparatus for acoustically manipulating biological particles, and specifically discloses concentrating biological particles in a liquid suspension with acoustic focusing in a flow through system. US 2013/0116459 A1 further discloses a flow-through conduit which applies acoustic forces to the flowing sample and various components are extracted and separated.

WO 2008/147530 discloses a fluidic device using sorting stations for separating target species from other species in a sample, whereby acoustic forces are used as a particle capture force. WO 2008/147530 further discloses that by applying an acoustic wave field, particles can be directed to pressure nodes of the standing acoustic wave where different field distributions have varying effects on particles, for example based on size and that this force can be used to separate components such as for example by "manipulating particles into a trap"

### SUMMARY

The invention provides for a method of processing a biological sample according to claim 1. Methods, in certain instances, also include acoustically separating cells from cellular debris and non-cellular macromolecules as well as magnetically separating magnetically labelled moieties from unlabeled moieties. The invention also provides for a system for processing a biological sample according to claim 17.

### BRIEF DESCRIPTION OF THE DRAWINGS

The invention may be best understood from the following detailed description when read in conjunction with the accompanying drawings. Included in the drawings are the following figures:
**Figure 1** illustrates an example ,not covered by the present invention, of acoustically separating larger components from smaller components in the disrupted biological sample.
**Figure 2** illustrates an example, not covered by the present invention, of acoustically separating cells from cellular debris and non-cellular macromolecules.
**Figure 3** illustrates acoustically separating larger components from smaller components in the disrupted biological sample configured with a feedback monitor positioned in a region of hydrodynamic focusing according to the invention.
**Figure 4** illustrates an example of magnetically depleting magnetically labeled moieties according to certain embodiments.
**Figure 5** shows a schematic of a system for processing a biological sample according to certain embodiments.
**Figure 6** illustrates an example of separating cells from cellular debris and non-cellular macromolecules using a second acoustic concentrator device according to certain embodiments.
**Figure 7** illustrates a schematic of a system for processing a biological sample having a magnetic separator device according to certain embodiments.
**Figure 8** illustrates a schematic of a system for processing a biological sample coupled to a fluorescence activated cell sorter (FACS) system for analyzing and sorting the collected cells according to certain embodiments.
**Figures 9a****-b** shows images of separating particles of different sizes in an acoustic concentrator device at low flow rates according to certain embodiments.
**Figures 10a****-b** illustrates hydrodynamic focusing in the acoustic concentrator device according to certain embodiments.

### DETAILED DESCRIPTION

Before the present invention is described in greater detail, it is to be understood that this invention is not limited to particular embodiments described, as such may vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As reviewed above, the present disclosure provides methods for processing a biological sample. In further describing embodiments of the disclosure, methods for processing a biological sample are first described in greater detail. Next, systems suitable for practicing the subject methods to process a biological sample are described. Computer controlled systems and kits are also provided.

### METHODS FOR PROCESSING A BIOLOGICAL SAMPLE

As summarized above, the present disclosure includes methods for processing a biological sample to collect cells from the processed biological sample. By "collect cells" is meant isolating free cells from the other components of the biological sample and may include separating cells from other types of undesired cells, separating cells from cellular debris (e.g., cell fragments, fragmented cell membranes, organelles, dead or lysed cells) as well as separating cells from non-cellular macromolecules such as connective tissue, free lipids, proteins and nucleic acid fragments. Isolating cells from a biological sample also includes breaking up agglomerated cells or cell aggregates. In certain embodiments, methods include breaking up an organ, tissue or tissue fragment in order to collect the cells which collectively make up the organ, tissue or tissue fragment.

In embodiments of the present disclosure, the subject methods provide cell samples that exhibit low entrainment. Entrainment is a measure of the degree of aggregation of components (e.g. cells) in a liquid sample, defined as the ratio of the observed distribution of the component over the expected distribution based on a normal Poisson distribution, e.g., as described in Lindmo, et al. (1981) Cytometry, 2, 151-154. In certain aspects, the subject device may facilitate the production of samples with an entrainment factor of 2.0 to 0.0, such as about 1.5 to 0.0, including 1.0 to 0.0, 0.75 to 0.0, about 0.5 to 0.0, 0.4 to 0.02, or 0.25 to 0.0.

As used herein, the term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.)

In embodiments of the present disclosure, the biological sample contains cells. Suitable cells include eukaryotic cells (e.g., mammalian cells) and/or prokaryotic cells (e.g., bacterial cells or archaeal cells). Samples may be obtained from an *in vitro* source (e.g., a suspension of cells from laboratory cells grown in culture) or from an *in vivo* source (e.g., a mammalian subject, a human subject, etc.). In some embodiments, the cellular sample is obtained from an *in vitro* source. *In vitro* sources include, but are not limited to, prokaryotic (e.g., bacterial, archaeal) cell cultures, environmental samples that contain prokaryotic and/or eukaryotic (e.g., mammalian, protest, fungal, etc.) cells, eukaryotic cell cultures (e.g., cultures of established cell lines, cultures of known or purchased cell lines, cultures of immortalized cell lines, cultures of primary cells, cultures of laboratory yeast, etc.), tissue cultures, and the like.

In some embodiments, the sample is obtained from an *in vivo* source and can include samples obtained from tissues (e.g., cell suspension from a tissue biopsy, cell suspension from a tissue sample, etc.) and/or body fluids (e.g., whole blood, fractionated blood, plasma, serum, saliva, lymphatic fluid, interstitial fluid, etc.). In some cases, cells, fluids, or tissues derived from a subject are cultured, stored, or manipulated prior to evaluation. *In vivo* sources include living multi-cellular organisms and can yield non-diagnostic or diagnostic cellular samples.

In certain embodiments the source of the sample is a "mammal" or "mammalian", where these terms are used broadly to describe organisms which are within the class mammalia, including the orders carnivore (e.g., dogs and cats), rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present invention may be applied to samples from a human subject, it is to be understood that the methods may also be carried-out on samples from other animal subjects (that is, in "non-human subjects") such as, but not limited to, birds, mice, rats, dogs, cats, livestock and horses.

In certain embodiments, the biological sample is a specimen that has been preloaded into a container (e.g., blender cup, vortex microtube, sonicator vessel, etc.) configured for use with the biological sample disrupter and is stored in the container for a predetermined period of time before the biological sample is disrupted. The amount of time the biological sample is stored following preloading into the container before disrupting the biological sample may vary, such as 0.1 hours or more, such as 0.5 hours or more, such as 1 hour or more, such as 2 hours or more, such as 4 hours or more, such as 8 hours or more, such as 16 hours or more, such as 24 hours or more, such as 48 hours or more, such as 72 hours or more, such as 96 hours or more, such as 120 hours or more, such as 144 hours or more, such as 168 hours or more and including preloading the biological sample into the container 240 hours or more before disrupting the biological sample or may range such as from 0.1 hours to 240 hours before disrupting the biological sample, such as from 0.5 hours to 216 hours, such as from 1 hour to 192 hours and including from 5 hours to 168 hours before disrupting the biological sample. For example, the biological sample may be preloaded into a container (e.g., blender cup, vortex microtube, sonicator vessel, etc.) configured for use with the biological sample disrupter at a remote location (e.g., at home using an at-home kit or in a physician's office) and sent to a laboratory for processing in accordance with the subject methods. By "remote location" is meant a location other than the location at which the sample is contained and preloaded into the container. For example, a remote location could be another location (e.g. office, lab, etc.) in the same city, another location in a different city, another location in a different state, another location in a different country, etc., relative to the location of the processing device, e.g., as described in greater detail below. In some instances, two locations are remote from one another if they are separated from each other by a distance of 10 m or more, such as 50 m or more, including 100 m or more, e.g., 500 m or more, 1000 m or more, 10,000 m or more, up to, in some instances, 100,000 m, etc.

Biological samples processed by the subject methods may exhibit a wide range of viscosities. The viscosity of a liquid may depend on temperature. In certain embodiments, a fluid sample has a viscosity substantially equal to that of water at the given temperature (e.g., 1 cP at 20°C, 0.65 cP at 40°C). Fluid samples useful in the present disclosure may exhibit a wide range of viscosities, ranging in some aspects from 0.01 cP to 750 cP, including 0.1 cP to 100 cP, such as 0.1 cP to 50 cP, 0.2 cP to 10 cP, 0.2 cP to 2.0 cP, 0.5 to 1.5 cP, or 0.75 cP to 1.5 cP.

In practicing methods according to the invention, a biological sample is disrupted to produce a disrupted biological sample followed by acoustically separating larger components from smaller components in the disrupted biological sample to collect individual cells from the biological sample. The term "disrupted" is used in its conventional sense to refer to breaking up the biological sample into its constituent components, such as into cells, tissue aggregates, cell aggregates (e.g., clumps of cells), cellular debris (e.g., cell fragments, fragmented cell membranes, organelles, dead or lysed cells) as well as non-cellular macromolecules such as connective tissue, free lipids, proteins and nucleic acid fragments. In some embodiments, disrupting the biological sample includes tissue disaggregation. In other embodiments, disrupting the biological sample include agglomerated cell disaggregation. In yet other embodiments, disrupting the biological sample includes breaking up aggregates of cells and cellular debris. In yet other embodiments, disrupting the biological sample includes breaking up aggregates of cells and non-cellular macromolecules. In still other embodiments, methods include a combination of one or more of tissue aggregation, agglomerated cell disaggregation, breaking up aggregates of cells and cellular debris and breaking up aggregates of cells and non-cellular macromolecules.

Depending on the type of biological sample, disrupting the biological sample may include, but is not limited to mechanical tissue disaggregation, chemical tissue disaggregation, enzymatic tissue disaggregation, disaggregation, mechanical cell disaggregation, ultrasonic cell disaggregation, and combinations thereof, among other protocols. Any suitable disrupting protocol may be employed so long as it is sufficient to break up the biological sample into individual components of the biological sample without lysis or destruction of the cells. Disruption of the biological sample may include grinding, shearing, beating, shocking as well as employing mechanical homogenizers, manual homogenizers, mortar and pestles, sonicators, mixer mills, vortexers among other types of biological sample disrupters.

In certain embodiments, disrupting the biological sample includes tissue disaggregation. Tissue disaggregation can be carried out according to any convenient protocol so long as it is sufficient to break up the tissue into its constituent components while retaining the viability of the cells which collectively make up the tissue. In some embodiments, tissue disaggregation includes mechanical dissociation of the tissue, including but not limited mincing, milling, chopping or cutting with a sharp blade (either manual or machine operated), blending, grinding, scraping, homogenization, pressing through nylon or steel mesh, vortexing or by abnormal osmolality stress. In certain embodiments, tissue disaggregation includes grinding the tissue. In other embodiments, tissue disaggregation includes vortexing the tissue.

In some embodiments, disrupting the biological sample includes disaggregating agglomerated cells, cellular debris and non-cellular macromolecules. In these embodiments, methods include separating individual cells from other cells, cellular debris (e.g., fragmented cell membranes, free organelles) and from non-cellular macromolecules (e.g., adhesion molecules, desmosomes, contaminants and free lipids, proteins and nucleic acid fragments). In some instances, a given biological sample is considered to be disrupted if, following the disrupting step, 1 or more, such as 2 or more, e.g., 5 or more, 10 or more, 25 or more, 50 or more, cells which were originally stably associated with each other are no longer stably associated with other, i.e., they are free to move in the sample relative to each other.

Methods for disaggregating agglomerated cells, cellular debris and non-cellular macromolecules in the biological sample may include disrupting non-covalent interactions, such as hydrogen bonding, polar interactions or weak electrostatic interaction or degrading adhesive components connecting cells together or binding cellular debris or non-cellular compounds to the individual cells. Cell disaggregation can be carried out according to any convenient protocol so long as it is sufficient to individual cells from each other, extraneous cellular debris or non-cellular macromolecules in the biological sample without disrupting or destroying the viability of the cells. Protocols of interest for cell disaggregation may include, but are not limited to, mechanical agitation, vortex, sonication, blending, filtration and combinations thereof among other protocols. In certain embodiments, methods include disrupting cell aggregates by mechanically agitating the biological sample, such as with a mechanical shaker or blender. In other embodiments, methods include disrupting cell aggregates by vortexing the biological sample. In yet other embodiments, methods include disrupting cell aggregates by sonication.

In some embodiments, disrupting the biological sample includes employing an enzymatic disrupter. Enzymatic disrupters of interest may include, but are not limited to, proteolytic and biomolecule digestive enzymes capable of digesting desmosomes, tissue stromal elements as well as extracellular and intercellular adhesions. For example, proteolytic enzymes of interest may include trypsin, pepsin, papain, collagenase, elastase, hyaluronidase, pronase, chymotrypsin, catalase, dispase, as well as DNase. The amount of enzymatic disrupter employed will vary depending on the type and size of biological sample, as well as extent of biological sample disrupting desired and ranges from 0.001 mg/mL to 1000 mg/mL, such as from 0.005 mg/mL to 500 mg/mL, such as from 0.01 mg/mL to 250 mg/mL, such as from 0.05 mg/mL to 100 mg/mL, such as from 0.1 mg/mL to 90 mg/mL, such as from 0.5 mg/mL to 75 mg/mL, such as from 1 mg/mL to 50 mg/mL and including from 5 mg/mL to 25 mg/mL.

The enzymatic disrupter may be contacted with the biological sample in discrete intervals or may be applied all at once to the biological sample. Where the enzymatic disrupter is contacted with the biological sample in discrete intervals, the amount of enzymatic disrupter contacted with the biological sample during each interval may vary, ranging from 0.001 mg to 1000 mg, such as from 0.005 mg to 750 mg, such as from 0.01 mg to 500 mg, such as from 0.05 mg to 400 mg, such as from 0.1 mg to 250 mg, including from 1 mg to 100 mg during each interval. In these embodiments, the enzymatic disrupter may be contacted with the biological sample every 0.1 minute or more, such as every 0.5 minute or more, such as every minute or more, such as every 2 minutes or more, such as every 3 minutes or more, such as every 5 minutes or more, such as every 10 minutes or more and including every 30 minutes or more.

Disrupting the biological sample may also include employing a chemical disrupter. Chemical disrupters of interest may include, but are not limited to chelating, complexing or sequestration agents capable of disrupting desmosomes, tissue stroma, as well as intercellular adhesion and cell-surface integrity. In certain embodiments, chemical disrupters are configured to omit or sequester calcium or magnesium ions in a manner sufficient to interfere with intercellular adhesion and cell-surface integrity. For example, chemical disrupters of interest may include a chelating agent such as of ethylene diamine tetra acetic acid (EDTA), ethyleneglycol-bis-(beta-aminoethyl ether) N,N,N',N'-tetraacetic acid (EGTA), 2,3-dimercaptopropanel- 1 -sulfonic acid (DMPS), and 2,3-dimercaptosuccinic acid (DMSA), bidentate phosphines such as 2,2'-bis(diphenylphosphino)-1,1'-binaphthyl (BINAP), bisphosphonates and citric acid. The amount of chemical disrupter employed will also vary depending on the type and size of biological sample, as well as extent of disaggregation desired and ranges from 0.001 mg/mL to 1000 mg/mL, such as from 0.005 mg/mL to 500 mg/mL, such as from 0.01 mg/mL to 250 mg/mL, such as from 0.05 mg/mL to 100 mg/mL, such as from 0.1 mg/mL to 90 mg/mL, such as from 0.5 mg/mL to 75 mg/mL, such as from 1 mg/mL to 50 mg/mL and including from 5 mg/mL to 25 mg/mL.

Depending on the size and type of biological sample, the duration for disrupting the biological sample may vary, such as 0.01 minutes or more, such as 0.05 minutes or more, such as 0.1 minutes or more, such as 0.5 minutes or more, such as 1 minute or more, such as 5 minutes or more, such as 10 minutes or more, such as 30 minutes or more, such as 60 minutes or more and including 120 minutes or more. An upper limit for the time that the biological sample is disrupted may be, in certain instances, 500 minutes or less, such as 400 minutes or less, such as 300 minutes or less, such as 240 minutes or less, such as 180 minutes or less, such as 120 minutes or less, such as 60 minutes or less, such as 30 minutes or less and including 10 minutes or less. In certain embodiments, the duration of disrupting the biological sample ranges from 0.01 minutes to 120 minutes, such as 0.05 minutes to 90 minutes, such as 0.1 minutes to 60 minutes, such as 0.5 minutes to 30 minutes, such as 1 minute to 15 minutes and including disrupting the biological sample for a duration which ranges from 5 minutes to 10 minutes.

Depending on the type and size of biological sample as well as desired disruption, protocols for disrupting the biological sample can be pulsed or continuous. By "pulsed" is meant that disruption of the biological sample can be performed in discrete intervals. The duration of each interval may vary and may be 0.01 minutes or longer, such as 0.05 minutes or longer, such as 0.1 minutes or longer, such as 0.5 minutes or longer, such as 1 minute or longer, such as 5 minutes or longer and including 10 minutes or longer. An upper limit for the duration of each disruption interval is, in certain instances, 60 minutes or less, such as 45 minutes or less, such as 30 minutes or less, such as 15 minutes or less, such as 10 minutes or less, such as 5 minutes or less and including 1 minute or less.

Disrupting the biological sample can be carried out at any suitable temperature so long as the viability of the cells collected is preserved as desired. As such, the temperature for disrupting the biological may vary, such as from -80 °C to 100 °C, such as from -75 °C to 75 °C, such as from -50 °C to 50 °C, such as from -25 °C to 25 °C, such as from -10 °C to 10 °C, and including from 0 °C to 25 °C.

As described above, the invention includes acoustically separating larger components from smaller components to collect individual cells in the disrupted biological sample. The term "acoustically separating" is used in its conventional sense broadly and generically to refer to a process in which particulate matter (e.g., cells, cellular debris, tissue matter and non-cellular compounds) in a biological sample may be controlled or manipulated by application of an ultrasonic standing wave. Accordingly, in certain embodiments, methods include acoustically sorting components of the disrupted biological sample. In other instances, methods include acoustically concentrating components of the disrupted biological sample.

In embodiments of the present disclosure, larger components in the disrupted biological sample include tissue, tissue fragments and cell aggregates while smaller components in the disrupted biological sample include individual cells, cellular debris and non-cellular macromolecules. As such, in certain instances, methods include acoustically separating tissue, tissue fragments and cell aggregates from individual cells, cellular debris and non-cellular macromolecules present in the disrupted biological sample.

Methods for acoustic separation as well as devices of interest may include, but are not limited to, those described in United States Patent Application Serial No. 14/061,678 filed on October 23, 2013, United States Patent No. 6,929,750; Laurell, et al. (2007) Chem. Soc. Rev., 2007, 36, 492-506; Petersson, et al. (2005) Analytical Chemistry 77: 1216-1221; and Augustsson, et al. (2009) Lab on a Chip 9: 810-81 8. Briefly, an acoustic contrast factor (Φ-factor) depends on both a particle's (e.g., tissue aggregate, cell aggregate or individual cell) density (ρ_{c}) and its compressibility (β_{c}) in relation to the corresponding properties of the surrounding medium (ρ_{w}, β_{w}). An acoustic contrast factor may be positive or negative, which determines the direction of the acoustic force and whether a particular particle will move towards a standing pressure wave node or towards the pressure antinode.

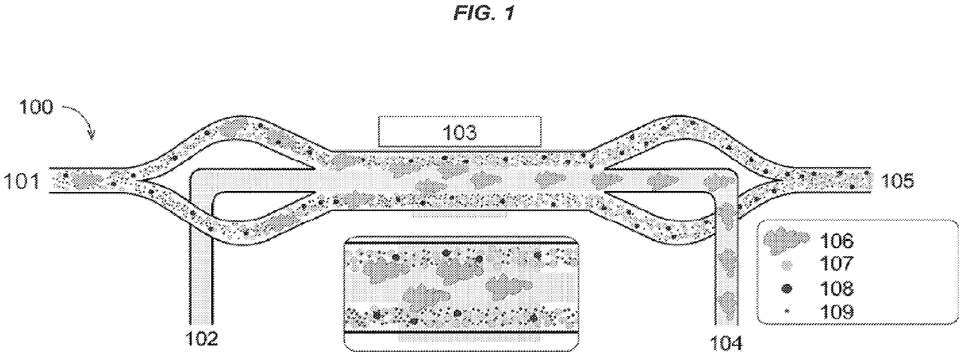

FIG. 1 illustrates an example, not covered by the present invention, of acoustically separating larger components from smaller components in the disrupted biological sample. As illustrated in FIG. 1, disrupted biological sample 101 is conveyed into a channel of the acoustic concentrator device through one or more inlets while laminating flow buffer 102 is conveyed into the channel through a central inlet. Separation of larger components 106 such as tissue, tissue fragments and cell aggregates from smaller components such as individual cells 107, cellular debris 108 and non-cellular macromolecules 109 is acoustically driven by a standing wave exerted by piezoelectric transducer 103. In this way, larger components are focused to the center of the channel while smaller components remain along the side of the channel. Outlets from the acoustic concentrator device convey the larger components such as tissue, tissue fragments and cell aggregates back to the sample disrupter 104, while smaller components are conveyed 105 either to a storage reservoir or to a second acoustic concentrator device (as described in greater detail below) for separating individual cells from yet smaller components such as cellular debris and non-cellular macromolecules.

In certain aspects, acoustically separating larger components in the disrupted biological sample from smaller components follows the Lund-method, where compounds in the disrupted biological sample of different sizes are acoustically separated in a laminar flow microchannel ultrasonically actuated using an acoustic field generator (e.g., a piezoelectric ceramic). In certain embodiments, the width of the channel corresponds to half the desired ultrasonic wavelength, creating a resonator between the side walls of the flow channel in which a standing wave can be formed. In these embodiments, the induced standing wave is generated orthogonal to the incident ultrasonic wave front. Larger components of the disrupted biological sample with a positive Φ-factor are moved during flow through the channel, by means of the axial primary radiation force (PRF), towards the pressure nodal plane along the channel center, while smaller components of the disrupted biological sample remain close to the side walls. Separation of the larger components from the smaller components is, in certain instances, completed by a split channel outlet configured to provide the separated larger components through a center outlet and the smaller components through one or more side outlets. In some embodiments, the acoustic standing wave is focused to the center of the flow channel. In these embodiments, the acoustic standing wave is configured to propagate within the channel applying a acoustic radiation pressure within the flow channel. In certain instances, the applied acoustic standing wave does not propagate outside of the flow channel. In certain embodiments, the acoustic field is applied only in a single direction by the vibration transducer. As such, in these embodiments the vibration transducer does not simultaneously apply acoustic fields in two or more different directions.

In some embodiments, fluidic flow through the acoustic concentrator device is laminar. The term "laminar flow" is used in its conventional sense to refer to the flow dynamic where fluid flows in a plurality of parallel layers which little to no disruption between the layers. For instance, a stream of sheath buffer may be laminated between two streams of sample in the flow through the acoustic concentrator device. In these embodiments, when an acoustic field is applied, particles of higher density (e.g., tissue, cell aggregates, etc.) are forced to a node of the acoustic standing wave in a laminate of flowing wash buffer. Larger components of the separated disrupted biological sample may exit the acoustic concentrator device through a dedicated sample outlet while smaller components in parallel laminating sample streams may be directed to different outlets.

The disrupted biological sample is conveyed to the acoustic separator device through one or more inputs. In certain embodiments, during separation the disrupted biological sample is carried through the acoustic separator device along the sides of a conduit and a laminating wash buffer is flowed between. As such, the first liquid medium (e.g., disrupted biological sample) and the second liquid medium (e.g., flowing buffer) are combined in a manner sufficient to produce a laminar flow of the first and second media, i.e., a flow in which the two media are flowing in distinct but adjacent and contacting flow paths. The densities of the first and second media differ in some instances in order to facilitate the manipulation of a component from a first media to a second media, or *vice versa.* For example, in some instances the density difference between the first and second media is 0.01% or greater, such as 0.05% or greater, such as 0.1% or greater, such as 0.5% or greater, such as 1% or greater, such as 2% or greater, such as 5% or greater and including 10% or greater. An upper limit density difference between the first and second media in the subject methods may, in certain instances be 25% or less, such as 20% or less, 15% or less, such as 10% or less and including 5% or less.

In practicing the subject methods, a transducer (e.g., piezoelectric transducer) located below the conduit is activated to create an acoustic standing wave in the channel. The applied standing wave exerts acoustic radiation pressure to particles of a predetermined size contained in the disrupted biological sample so as to move these particles from the sides of the conduit towards the pressure node formed in the center of the channel (e.g., to a focusing zone in the flowing buffer). In embodiments of the present disclosure, the applied acoustic standing wave is sufficient to separate larger components of the disrupted biological sample from smaller components. For example, methods include concentrating the larger components at the node of the acoustic standing wave in the flow buffer while retaining the smaller components in the disrupted biological sample flow along the sides of acoustic separator conduit. In these embodiments, smaller components and larger components present in the disrupted biological sample are carried out of the acoustic separator device through different outlets, thereby effectively separating larger components of the disrupted biological sample from smaller components.

As discussed above, depending on the type of biological sample, in some instances larger components in the disrupted biological sample may be one or more of tissue, tissue fragments or cell aggregates and smaller components may be one or more of individual cells, cellular debris or non-cellular macromolecules. In certain instances, larger components in the disrupted biological sample are cell aggregates and smaller components are individual cells, cellular debris and non-cellular macromolecules in the disrupted biological sample. Accordingly, in some embodiments, acoustically separating larger components in the disrupted biological sample from smaller components includes separating tissue, tissue fragments or cell aggregates, from individual cells, cellular debris and non-cellular macromolecules in the disrupted biological sample. In other embodiments, acoustically separating larger components from smaller components includes separating cell aggregates from individual cells, cellular debris and non-cellular macromolecules in the disrupted biological sample. In yet other embodiments, acoustically separating larger components from smaller components includes separating individual cells from cellular debris and non-cellular macromolecules. In still other embodiments, acoustically separating larger components from smaller components includes separating individual cells from cellular debris. In another embodiment, acoustically separating larger components from smaller components includes separating individual cells from non-cellular macromolecules.

The frequency of the applied acoustic wave to acoustically separate components of the disrupted biological sample varies depending on the biological sample, the width of separation channel, composition of the buffer solution as well as desired separation of components and may be about 1.5 MHz or more, such as 2 MHz or more, such as 2.5 MHz or more, such as 3 MHz or more, such as 3.5 MHz or more, such as 4 MHz or more, such as 4.5 MHz or more, such as 5 MHz or more, such as 5.5 MHz or more and including about 6 MHz or more. For example, the frequency of applied acoustic wave may range from 1.0 MHz to 6MHz, such as from 1.5 to 5.5 MHz, such as from 2 MHz to 5 MHz, such as from 2.5 to 4.5 MHz and including from 3 MHz to 4 MHz. An upper limit for the frequency of the applied acoustic wave may, in certain instances, be 10 MHz or less, such as 7.5 MHz or less, and including 5 MHz or less. In certain embodiments, the frequency of the acoustic wave that is applied corresponds to the fundamental resonance mode of the vibration transducer, such as for example 2.0 MHz for certain piezoelectric transducer plates. In other embodiments, the frequency of the applied acoustic wave corresponds to a harmonic of the vibration transducer, such as a first harmonic, a second harmonic and the like.

In some instances, the acoustic concentrator device is configured such that the position of one or more acoustic nodes is determined by the speed of sound in the buffer solution employed and acoustic concentrator channel width, given by the equation n = c/λ where n is the frequency, c is the speed of sound in the buffer employed and λ is the width of the channel. For example, where the buffer is 1x phosphate buffer saline (PBS) (the speed of sound being 1500 m/s in 1x PBS) in an acoustic concentrator device having a channel width of 375 µm, the resonant frequency is 4 MHz. In these embodiments, a node will occur in the center of the channel at ½ the resonant frequency (i.e., 2 MHz). Accordingly, higher multiples of this frequency will produce multiple nodes in the channel, which provide for a plurality of focusing streams. For example, in these embodiments, a 4 MHz frequency would produce 2 streams, while a 6 MHz frequency would produce 3 streams.

The acoustic pressure amplitude of the acoustic wave applied to separate components of the disrupted biological sample may also vary depending on the components of the disrupted biological sample, rate of fluid flow during acoustic separation and may range from 0.01 MPa to 1 MPa, such as from 0.05 MPa to 0.95 MPa, such as from 0.1 MPa to 0.9 MPa, such as from 0.2 MPa to 0.8 MPa and including from 0.25 MPa to 0.75 MPa. In embodiments, the acoustic pressure amplitude of the applied acoustic wave is sufficient to acoustically separate individual cells from cell aggregates, cellular debris or non-cellular macromolecules in the disrupted the biological sample.

In methods of the present disclosure, components of the disrupted biological sample can be selectively separated based on size. For example, depending on the components of the disrupted biological sample, methods may include applying acoustic radiation pressure which is sufficient to separate out components which have diameters of 5 µm or greater, such as 10 µm or greater, such as 25 µm or greater, such as 50 µm or greater and including 100 µm or greater, such as from 10 to 25 µm, such as from 25 to 50 µm, such as from 50 to 75 µm and including from 75 to 100 µm. In some embodiments, the applied acoustic pressure is sufficient to separate tissue, tissue fragments or cell aggregates from individual cells, cellular debris or non-cellular macromolecules in the disrupted biological sample. In other embodiments, the applied acoustic pressure is sufficient to separate individual cells from cell aggregates, cellular debris or non-cellular macromolecules in the disrupted the biological sample.

The activation voltage that is applied may also vary. For example, in certain aspects an activation voltage is 0.1 Vₚₚ to 100 Vₚₚ or higher, such as 0.1 Vₚₚ to 1 Vₚₚ, 1 Vₚₚ to 10 Vₚₚ, 10 Vₚₚ to 20 Vₚₚ, 20 Vₚₚ to 30 Vₚₚ, 30 Vₚₚ to 40 Vₚₚ, 40 Vₚₚ to 50 Vₚₚ, 50 Vₚₚ to 75 Vₚₚ, 75 Vₚₚ to 100 Vₚₚ, or 100 Vₚₚ or higher.

In certain embodiments, the rate of acoustic separation is 1 µl/min or more. For example, in certain aspects the rate is 10 µl/min or more, including 10 µl/min to 50 µl/min, 50 µl/min to 100 µl/min, 100 µl/min to 200 µl/min, 200 µl/min to 300 µl/min, 300 µl/min to 400 µl/min, 400 µl/min to 500 µl/min, 500 µl/min to 600 µl/min, 600 µl/min to 700 µl/min, 700 µl/min to 800 µl/min, 800 µl/min to 900 µl/min, 900 µl/min to 1 ml/min, 1 ml/min to 10 ml/min, 10 ml/min to 20 ml/min, 20 ml/min to 30 ml/min, 30 ml/min to 40 ml/min, 40 ml/min to 50 ml/min, 50 ml/min to 60 ml/min, 60 ml/min to 70 ml/min, 70 ml/min to 80 ml/min, 80 ml/min to 90 ml/min, 90 ml/min to 100 ml/min, 100 ml/min to 150 ml/min, 150 ml/min to 200 ml/min, 200 ml/min to 500 ml/min, or 500 ml/min to 1 L/min. In certain aspects, the flow rate during acoustic separation of larger components in the disrupted biological sample from smaller components is adjusted such that output is optimal for subsequent analysis by a feedback monitor (described in greater detail below), such as 20 to 150 µL/min, including 30 to 100 µL/min, such as 40-60 µL/min.

In certain embodiments, methods further include separating cellular debris and non-cellular macromolecules from individual cells. In practicing the subject methods, cellular debris and non-cellular macromolecules (e.g., protein, enzymes, nucleic acid fragments, lipids, etc.) are separated from individual cells in a second acoustic concentrator device fluidically coupled to the first acoustic concentrator device used to separate larger components from smaller components in the disrupted biological sample. Smaller components (i.e., cell samples) of the disrupted biological sample collected from the first acoustic concentrator device may be conveyed to the second acoustic concentrator device (may also be referred to as a washing device) through one or more inputs. In certain embodiments, cellular debris and non-cellular macromolecules are carried along the sides of the channel of the second acoustic concentrator device (washing device) while individual cells are focused to the center of the channel, with the fluid carrying the cellular debris and non-cellular macromolecules and the fluid carrying the cells operating under laminar flow.

A transducer located proximal to the conduit is activated to create an acoustic standing wave. In these embodiments, the applied standing wave exerts acoustic radiation pressure to the cells sufficient to move the cells towards the pressure node formed at the center of the conduit (e.g., to a focusing zone in the flowing buffer) where the cells are transported into a wash buffer which occupies the center of the fluidic channel and laminated between sample streams flowing along the side of the channel. In embodiments of the present disclosure, the applied acoustic standing wave is sufficient to separate the individual cells from cellular debris and from non-cellular macromolecules. For example, methods may include concentrating the cells at the node of the acoustic standing wave in the flow buffer while retaining enzymes and non-cellular macromolecules (e.g., enzymatic disrupters) along the sides of acoustic concentrator device channel. In these embodiments, the cells are carried out of the second acoustic concentrator device and collected through a center outlet. The separated cellular debris and non-cellular macromolecules are carried out of the acoustic wash device and collected through two or more side outlets.

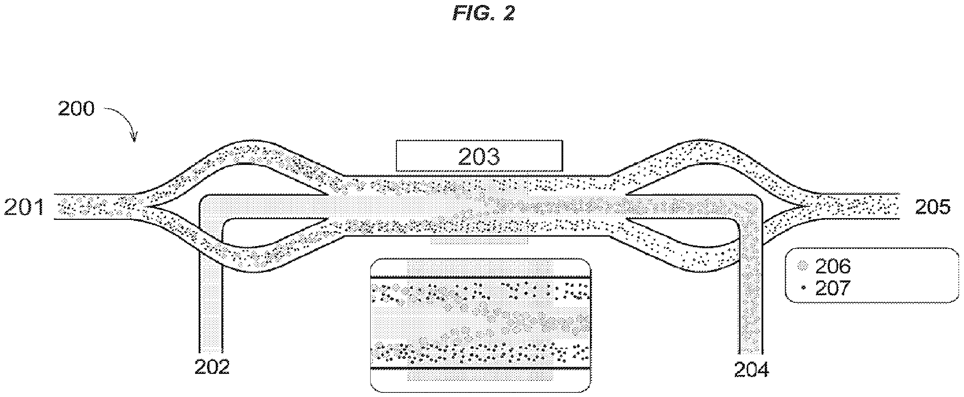

FIG. 2 illustrates an example not covered by the present invention of acoustically separating cells from cellular debris and non-cellular macromolecules according to certain embodiments of the present disclosure. As illustrated in FIG. 2, sample 201 containing smaller components such as cells, cellular debris and non-cellular macromolecules outputted from the first acoustic concentrator device are conveyed into a channel of the second acoustic concentrator device through one or more inlets while laminating wash buffer 202 is conveyed into the channel through a central inlet. Separation of cells 206 from cellular debris and non-cellular macromolecules 207 is acoustically driven by a standing wave exerted by piezoelectric transducer 203. In this way, cells are focused to the center of the channel while smaller components like cellular debris and non-cellular macromolecules flow along the side of the channel. Outlets from the acoustic concentrator device convey the cells to a collection reservoir or to an analyzer (e.g., flow cytometer as described in greater detail below) through a center outlet 204 while cellular debris and non-cellular macromolecules are conveyed to a waste reservoir 205.

The density of the laminating wash buffer may vary depending on the type of laminating wash buffer, buffer of the disrupted biological sample as well as the desired separation of the components of the disrupted biological sample. In certain embodiments, the laminating wash buffer has a density greater than the sample buffer containing the components of the disrupted biological sample. For example, the density of the laminating buffer may have a density which is 5% or greater than the density of the sample buffer, such as 10% or greater, such as 15% or greater, such as 20% or greater, such as 25% or greater, such as 30% or greater, such as 40% or greater and including a density which is 50% or greater than the density of the sample buffer. In some instances, the density of the laminating buffer has a density which is greater than the density of the sample buffer in a range from 1% to 100%, such as from 5% to 95%, such as from 10% to 90%, such as from 15% to 85%, such as from 20% to 80% and including a laminating buffer which has a density which is greater than the density of the sample buffer ranging from 25% to 75%.

The frequency of the applied acoustic wave to acoustically separate the individual cells from cellular debris and non-cellular macromolecules in the second acoustic concentrator device varies and may be about 1.5 MHz or more, such as 2 MHz or more, such as 2.5 MHz or more, such as 3 MHz or more, such as 3.5 MHz or more, such as 4 MHz or more, such as 4.5 MHz or more, such as 5 MHz or more, such as 5.5 MHz or more and including 6 MHz or more. For example, the frequency of applied acoustic wave may range from 1.0 MHz to 6MHz, such as from 1.5 to 5.5 MHz, such as from 2 MHz to 5 MHz, such as from 2.5 to 4.5 MHz and including from 3 MHz to 4 MHz. An upper limit for the frequency of the applied acoustic wave may, in certain instances, be 10 MHz or less, such as 7.5 MHz or less, and including 5 MHz or less. In certain embodiments, the frequency of the acoustic wave that is applied corresponds to the fundamental resonance mode of the vibration transducer, such as for example 2.0 MHz for certain piezoelectric transducer plates. In other embodiments, the frequency of the applied acoustic wave corresponds to a harmonic of the vibration transducer, such as a first harmonic, a second harmonic and the like. In embodiments, the frequency of the applied acoustic wave is sufficient to acoustically separate the individual cells from cellular debris and non-cellular macromolecules.

The acoustic pressure amplitude of the applied acoustic wave may also vary and may range from 0.01 MPa to 1 MPa, such as from 0.05 MPa to 0.95 MPa, such as from 0.1 MPa to 0.9 MPa, such as from 0.2 MPa to 0.8 MPa and including from 0.25 MPa to 0.75 MPa. In embodiments, the acoustic pressure amplitude of the applied acoustic wave is sufficient to acoustically separate the individual cells from cellular debris and non-cellular macromolecules.

The activation voltage that is applied may also vary. For example, in certain aspects an activation voltage is 0.1 Vₚₚ to 100 Vₚₚ or higher, such as 0.1 Vₚₚ to 1 Vₚₚ, 1 Vₚₚ to 10 Vₚₚ, 10 Vₚₚ to 20 Vₚₚ, 20 Vₚₚ to 30 Vₚₚ, 30 Vₚₚ to 40 Vₚₚ, 40 Vₚₚ to 50 Vₚₚ, 50 Vₚₚ to 75 Vₚₚ, 75 Vₚₚ to 100 Vₚₚ, or 100 Vₚₚ or higher.

Flow rate when acoustically separating individual cells from cellular debris and non-cellular macromolecules may vary and may be 1 µl/min or more. For example, in certain aspects the rate is 10 µl/min or more, including 10 µl/min to 50 µl/min, 50 µl/min to 100 µl/min, 100 µl/min to 200 µl/min, 200 µl/min to 300 µl/min, 300 µl/min to 400 µl/min, 400 µl/min to 500 µl/min, 500 µl/min to 600 µl/min, 600 µl/min to 700 µl/min, 700 µl/min to 800 µl/min, 800 µl/min to 900 µl/min, 900 µl/min to 1 ml/min, 1 ml/min to 10 ml/min, 10 ml/min to 20 ml/min, 20 ml/min to 30 ml/min, 30 ml/min to 40 ml/min, 40 ml/min to 50 ml/min, 50 ml/min to 60 ml/min, 60 ml/min to 70 ml/min, 70 ml/min to 80 ml/min, 80 ml/min to 90 ml/min, 90 ml/min to 100 ml/min, 100 ml/min to 150 ml/min, 150 ml/min to 200 ml/min, 200 ml/min to 500 ml/min, or 500 ml/min to 1 L/min. In certain aspects, the flow rate is adjusted such that output is optimal for subsequent analysis of the concentrated cells, such as 20 to 150 µL/min, including 30 to 100 µL/min, such as 40 to 60 µL/min. The flow may be adjusted such that output of the concentrated individual cells is optimal for subsequent analysis by a particular device, such as a cell sorter.

Exemplary methods not covered by the present invention include monitoring disaggregation of the biological sample. Monitoring disaggregation includes assessing (either by a human or with the assistance of a computer, if using a computer-automated process initially set up under human direction) the processed biological sample to measure the extent of aggregation exhibited by the processed biological sample after one or more intervals of the subject methods. Determining the extent of disaggregation may include assessing the amount of cell aggregates remaining in the processed biological sample or measuring the number of individual cells collected or a combination thereof.

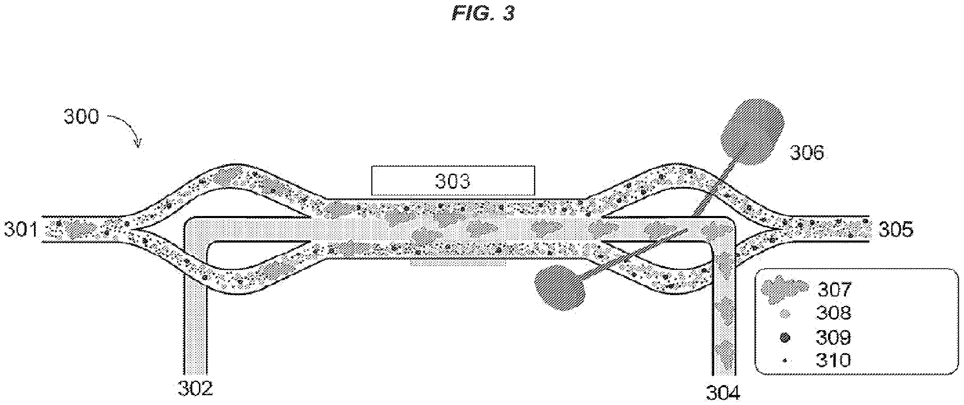

Monitoring includes collecting real-time data, such as by employing a detector (e.g., laser scatter detector, optical absorption detector) to assess disaggregation in processed biological sample. For example, monitoring disaggregation of the processed biological sample may include positioning a laser scatter detector near the central outlet of the acoustic concentrator device in a region of hydrodynamic focusing to monitor the amount of cell aggregates remaining in the processed biological sample. Examples of using a laser and laser scatter detector to assess tissue aggregation are described in Practical Flow Cytometry, 4th ed., John Wiley & Sons, Inc.; Hoboken, New Jersey (2003), the disclosure of which is herein incorporated by reference. FIG. 3 illustrates an example of acoustically separating larger components from smaller components in the disrupted biological sample configured with a feedback monitor positioned in a region of hydrodynamic focusing to monitor the amount of cell aggregates remaining in the processed biological, according to the invention. As illustrated in FIG. 3, disrupted biological sample 301 is conveyed into a channel of the acoustic concentrator device through one or more inlets while laminating flow buffer 302 is conveyed into the channel through a central inlet. Separation of larger components 307 such as tissue, tissue fragments and cell aggregates from smaller components such as individual cells 308, cellular debris 309 and non-cellular macromolecules 310 is acoustically driven by a standing wave exerted by piezoelectric transducer 303. Larger components are focused to the center of the channel while smaller components remain along the side of the channel. Feedback monitor (e.g., light scattering sensor) is positioned to take measurements at the center outlet of the acoustic concentrator device which conveys the larger components such as tissue, tissue fragments and cell aggregates back to sample disrupter 304, while smaller components are conveyed 305 either to a storage reservoir or to a second acoustic concentrator device for separating individual cells from yet smaller components such as cellular debris and non-cellular macromolecules.

In other embodiments, monitoring includes assessing disaggregation in the processed biological sample at regular intervals, such as every 1 minute, every 5 minutes, every 10 minutes, every 30 minutes, every 60 minutes or some other interval. In yet other embodiments, monitoring includes assessing disaggregation in the processed biological sample after every processing interval, after every 2 processing intervals, after every 3 processing intervals or after some other number of intervals.

Cell disaggregation in the processed biological sample may be assessed at any phase during the subject methods. The invention methods include assessing disaggregation in the processed biological sample after acoustically separating components from the disrupted biological sample. In these embodiments, assessing disaggregation may include determining the amount of cell aggregates remaining in the processed biological sample or measuring the number of individual cells collected.

Methods of the present disclosure may also include a step of assessing aggregation in the processed biological sample to identify any desired adjustments to the processing protocol. In other words, methods include providing feedback based on monitoring the processed biological sample, where adjustments to the processing protocol may vary in terms of goal, where in some instances the desired adjustment are adjustments that ultimately result in improved quality of the processed biological sample or an increase in the quantity of individual cells collected. In certain embodiments, where feedback provided by monitoring the processed biological sample indicates that a single processing interval is not sufficient to provide the desired quantity of collected individual cells or to reduce cell aggregates in the biological sample to a desired amount, methods may include conducting one or more additional processing intervals. In other words, the subject methods may, in certain instances, include multiple processing intervals. By "multiple processing intervals" is meant that protocols described herein to process the biological sample are repeated one or more times in a sequential manner. In practicing the subject methods, multiple interval protocols may include two or more processing intervals, such as three or more processing intervals, such as four or more processing intervals, such as five or more processing intervals, including ten or more processing intervals.

The number of processing intervals in a multiple processing interval protocol may vary, depending on the type and size of biological sample, efficiency of disaggregation during each processing interval as well as the amount of collected cells desired. In some embodiments, the number of processing intervals depends on the measured amount of cell aggregates present in the processed biological sample. Where the amount of cell aggregates is above a predetermined threshold, methods may include processing the biological sample one or more additional times until the desired amount of cell aggregates in the processed biological sample is reached. For example, methods may include conducting one or more additional processing intervals until the amount of cell aggregates in the processed biological sample is below a predetermined threshold such as 50% w/w or less, such as 40% w/w or less, such as 30% w/w or less, such as 20% w/w or less, such as 10% w/w or less and including 5% w/w or less.

In other embodiments, the number of processing intervals depends on the measured number of individual cells collected. Where the measured number of collected individual cells is determined to be below a predetermined threshold, methods may include processing the biological sample one or more additional times until the desired quantity of cells are collected. For example, methods may include conducting one or more additional processing intervals until the measured number of individual cells collected is above a predetermined threshold, such as 10³ cells or more, such as 10⁴ cells or more, such as 10⁵ cells or more, such as 10⁶ cells or more, such as 107 cells or more, such as 10⁸ cells or more and including 10⁹ cells or more.

The duration between processing intervals may vary depending on the type and size of biological sample and the number of processing intervals in the multiple interval protocol. For example, the time between intervals may be 0.1 minute or more, such as 0.5 minutes or more, such as 1 minute or more, such as 2 minutes or more, such as 3 minutes or more, such as 5 minutes or more and including 10 minutes or more.

As noted above, methods may include monitoring the processed biological sample. In certain embodiments, where feedback provided by monitoring the processed biological sample indicates that a particular protocol (e.g., disrupting protocol or acoustic separation protocol) is not effective in reducing cell aggregates in the biological sample to a desired amount or in providing a desired quantity of collected individual cells, methods may include changing one or more parts of the processing protocol (e.g., disrupting the biological sample, acoustic separation of the disrupted biological sample, magnetic separation of the disrupted biological sample). In one example, where the processed biological sample contains undisrupted tissue in an amount more than desired, methods may include changing the protocol used to disrupt the biological sample. For instance, disrupting the biological sample may be changed from mechanical agitation to blending with a tissue grinder. In another example, where the processed biological sample contains cellular debris or non-cellular macromolecules in an amount more than desired, methods may include employing a magnetic separation protocol or by increasing the number magnetic binding moieties contacted with the disrupted biological sample. In yet another example, where the collected individual cells from acoustic separator contain extraneous cell aggregates, methods may include changing the amplitude of the acoustic standing wave.

In certain embodiments, methods may also include separating magnetically labelled moieties from non-magnetically labeled moieties (e.g., moieties that are not associated with a magnetic label) in the disrupted biological sample. As described in greater detail below, compounds in the disrupted biological sample may be magnetically separated in a magnetic separator device. In certain instances, methods include separating magnetically labeled moieties of interest from moieties that are not of interest (e.g., moieties that are not magnetically labeled) by retaining the magnetically labeled moieties while not retaining moieties that are not of interest. As moieties of interest are magnetically labeled, the subject methods include retaining the magnetically labeled moieties by attracting the magnetically labeled moieties to a magnetic field source. Alternatively, methods may include separating magnetically labeled moieties that are not of interest from moieties that are of interest (e.g., moieties of interest that are not magnetically labeled) by retaining the magnetically labeled moieties that are not of interest while collecting the moieties that are of interest. In these embodiments, methods include retaining the magnetically labeled moieties that are not of interest by attracting the magnetically labeled moieties to a magnetic field source.

In these embodiments, methods include attaching a magnetic label to one or more target moieties in the disrupted biological sample prior to performing the magnetic separation assay (e.g., prior to separating magnetically labeled moieties from non-magnetically labeled moieties in the disrupted biological sample). As such, the method includes magnetically labeling one or more moieties in the disrupted biological sample prior to performing the magnetic separation assay.

Components of the disrupted biological sample may be magnetically labelled using any convenient magnetic label that can be stably associated with a magnetic label detectable by a magnetic separation device. By "stably associated" is meant that the magnetic label and the moiety of interest maintain their position relative to each other in space under the conditions of use, e.g., in separating components of the disrupted biological sample. As such, the magnetic label and the moiety of interest can be non-covalently or covalently stably associated with each other.

Magnetic labels useful in the practice of certain embodiments are magnetic particles, such as, but not limited to ferromagnetic, paramagnetic, super-paramagnetic, antiferromagnetic, or ferromagnetic particles. In certain instances, the magnetic particles appear "nonmagnetic" (e.g., have a remnant magnetization of substantially zero) in the absence of a magnetic field. Magnetic particles with a substantially zero remnant magnetization may not substantially agglomerate with each other in solution in the absence of an external magnetic field.

In some instances, the magnetic particles are biocompatible, e.g., water soluble and functionalized so that they may be readily attached to biomolecules of interest, such as an antibody that specifically binds to a target analyte. By associating or binding magnetic particles with a specific antibody, the magnetic particles may be targeted to a specific analyte through the specific binding interactions between the antibody and complementary antigen. In some instances, the magnetic label may be bound to the protein or antibody as described above through a non-covalent or a covalent bond with each other. Suitable non-covalent associations may include non-specific adsorption, binding based on electrostatic (e.g., ion, ion pair interactions), hydrophobic interactions, hydrogen bonding interactions, specific binding through a specific binding pair member covalently attached to the surface of the magnetic particle, and the like. Examples of covalent binding include covalent bonds formed between the biomolecule and a functional group present on the surface of the magnetic particle, e.g. -OH, where the functional group may be naturally occurring or present as a member of an introduced linking group. The magnetic label may be adsorbed, physisorbed, chemisorbed, or covalently attached to the surface of the moiety of interest.

In certain embodiments, the magnetic particles are nanoparticles. By "nanoparticle" is meant a particle having an average size (e.g., mean diameter) in the range of 1 nm to 1000 nm. In certain embodiments, the average size (e.g., mean diameter) of the magnetic nanoparticles is sub-micron sized, e.g., from 1 nm to 1000 nm, or from 1 nm to 500 nm, or from 5 nm to 250 nm, such as from 5 nm to 150 nm, including from 5 nm to 50 nm. For example, magnetic nanoparticles having a mean diameter of 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, 25 nm, 30 nm, 35 nm, 40 nm, 45 nm, 50 nm, 55 nm, 60 nm, 70 nm, 80 nm, 90 nm, 100 nm, 110 nm, 120 nm, 130 nm, 140 nm, 150 nm, and 200 nm as well as nanoparticles having mean diameters in ranges between any two of these values, are suitable for use herein. In certain embodiments, the magnetic particles are substantially uniform in shape. For example, the magnetic particles may be spherical in shape. In addition to a spherical shape, magnetic nanoparticles suitable for use herein can be shaped as disks, rods, coils, fibers, pyramids, and the like.

The magnetic label may be stably associated with the moiety (or moieties) of interest through non-covalent or covalent interactions as described above. For example, the magnetic label may be associated with the moiety of interest through a binding interaction between a binding pair of molecules. The binding pair of molecules may vary depending on the binding interaction of interest. Binding interactions of interest include any interaction between the binding pair of molecules, where the binding interaction occurs with specificity between the binding pair of molecules under the environmental conditions of the binding interaction. Examples of binding interactions of interest include, but are not limited to: nucleic acid hybridization interactions, protein-protein interactions, protein-nucleic acid interactions, enzyme-substrate interactions and receptor-ligand interactions, e.g., antibody-antigen interactions and receptor-agonist or antagonist interactions.

Examples of molecules that have molecular binding interactions of interest include, but are not limited to: biopolymers and small molecules, which may be organic or inorganic small molecules. A "biopolymer" is a polymer of one or more types of repeating units. Biopolymers may be found in biological systems (although they may be made synthetically) and may include peptides, polynucleotides, and polysaccharides, as well as such compounds composed of or containing amino acid analogs or non-amino acid groups, or nucleotide analogs or non-nucleotide groups. As such, biopolymers include polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. For example, a "biopolymer" may include DNA (including cDNA), RNA, oligonucleotides, PNA, other polynucleotides, and the like. A "biomonomer" references a single unit, which can be linked with the same or other biomonomers to form a biopolymer (e.g., a single amino acid or nucleotide with two linking groups, one or both of which may have removable protecting groups).

In some instances, the binding pair of molecules are ligands and receptors, where a given receptor or ligand may or may not be a biopolymer. The term "ligand" as used herein refers to a moiety that is capable of covalently or otherwise chemically binding a compound of interest. Ligands may be naturally-occurring or manmade. Examples of ligands include, but are not restricted to, agonists and antagonists for cell membrane receptors, toxins and venoms, viral epitopes, hormones, opiates, steroids, peptides, enzyme substrates, cofactors, drugs, lectins, sugars, oligonucleotides, nucleic acids, oligosaccharides, proteins, and the like. The term "receptor" as used herein is a moiety that has an affinity for a ligand. Receptors may be attached, covalently or non-covalently, to a binding member, either directly or via a specific binding substance. Examples of receptors include, but are not restricted to, antibodies, cell membrane receptors, monoclonal antibodies and antisera reactive with specific antigenic determinants, viruses, cells, drugs, polynucleotides, nucleic acids, peptides, cofactors, lectins, sugars, polysaccharides, cellular membranes, organelles, and the like. A "ligand receptor pair" is formed when two molecules have combined through molecular recognition to form a complex. Methods may, in certain instances, also include detecting a binding interaction between a binding pair of molecules. The binding interaction may include one member of the binding pair of molecules that is labeled with a magnetic label as described herein. For example, one member of the binding pair of molecules may be magnetically labeled and may bind to its complementary binding pair member to form a binding pair complex. The binding pair complex may be separated from the moieties not of interest in the sample using a magnetic separation device and methods as described herein. After performing the magnetic separation assay, the binding pair complex may be detected using any convenient method, such as, but not limited to, flow cytometry, fluorescence detection, high-performance liquid chromatography (HPLC), electrophoresis, combinations thereof, and the like.

In certain embodiments, methods for magnetic separation as well as devices of interest may include, but are not limited to, those described in United States Patent Application Serial No. 14/061,678 filed on October 23, 2013 and published as US 20140120570 , U.S. Patent Nos. 5,945,281, 6,858,440; 6,645,777; 6,630,355; and 6,254,830; U.S. Patent Application No. PCT/US2012/032423 published as WO2012032423; and Hoeppener, et al. (2012) Recent Results Cancer Res. 195:43-58.

In embodiments of the present disclosure, separating magnetically labeled moieties from non-magnetically labeled moieties in the disrupted biological sample includes applying a magnetic field having a magnetic flux sufficient to separate magnetically labeled moieties from non-magnetically labeled moieties in the sample. The magnetic field may be applied continuously as the sample flows through the conduit, or may be applied discontinuously in a pulsed application. By "pulsed" is meant that the magnetic field is applied to the flowing disrupted biological sample in discrete intervals. In other words, the magnetic field is applied for a predetermined duration, discontinued for a period of time followed by subsequent application of the magnetic field. The interval duration of applying the magnetic field to the disrupted biological sample may vary as desired and may be 0.01 minutes or longer, such as 0.05 minutes or longer, such as 0.1 minutes or longer, such as 0.5 minutes or longer, such as 1 minute or longer, such as 5 minutes or longer and including 10 minutes or longer. An upper limit for the interval duration of applying the magnetic field is, in certain instances, 60 minutes or less, such as 45 minutes or less, such as 30 minutes or less, such as 15 minutes or less, such as 10 minutes or less, such as 5 minutes or less and including 1 minute or less. Likewise, the duration between each interval of applying the magnetic field may vary, such as .01 minutes or longer, such as 0.05 minutes or longer, such as 0.1 minutes or longer, such as 0.5 minutes or longer, such as 1 minute or longer, such as 5 minutes or longer and including 10 minutes or longer. An upper limit for the duration between each interval of applying the magnetic field is, in certain instances, 60 minutes or less, such as 45 minutes or less, such as 30 minutes or less, such as 15 minutes or less, such as 10 minutes or less, such as 5 minutes or less and including 1 minute or less. Each interval of applying the magnetic field to the disrupted biological sample may be the same or different depending on the biological sample. In certain instances, each interval has the same duration. In other instances, each interval has a different duration. In yet other instances, protocols include some intervals which are of the same duration and some intervals of a different duration.

In certain embodiments, the magnetic field source is a permanent magnet (as described in greater detail below) and the magnetic field is applied continuously as the disrupted biological sample flows through the conduit of the magnetic separator device.

The flow rate during magnetic separation may vary, in certain embodiments, the rate being 1 µl/min or more. For example, in certain aspects the rate is 10 µl/min or more, including 10 µl/min to 50 µl/min, 50 µl/min to 100 µl/min, 100 µl/min to 200 µl/min, 200 µl/min to 300 µl/min, 300 µl/min to 400 µl/min, 400 µl/min to 500 µl/min, 500 µl/min to 600 µl/min, 600 µl/min to 700 µl/min, 700 µl/min to 800 µl/min, 800 µl/min to 900 µl/min, 900 µl/min to 1 ml/min, 1 ml/min to 10 ml/min, 10 ml/min to 20 ml/min, 20 ml/min to 30 ml/min, 30 ml/min to 40 ml/min, 40 ml/min to 50 ml/min, 50 ml/min to 60 ml/min, 60 ml/min to 70 ml/min, 70 ml/min to 80 ml/min, 80 ml/min to 90 ml/min, 90 ml/min to 100 ml/min, 100 ml/min to 150 ml/min, 150 ml/min to 200 ml/min, 200 ml/min to 500 ml/min, or 500 ml/min to 1 L/min. In certain aspects, the flow rate during magnetic separation is adjusted such that output is optimal for subsequent analysis by a feedback monitor (described in greater detail below), such as 20 to 150 µL/min, including 30 to 100 µL/min, such as 40 to 60 µL/min.

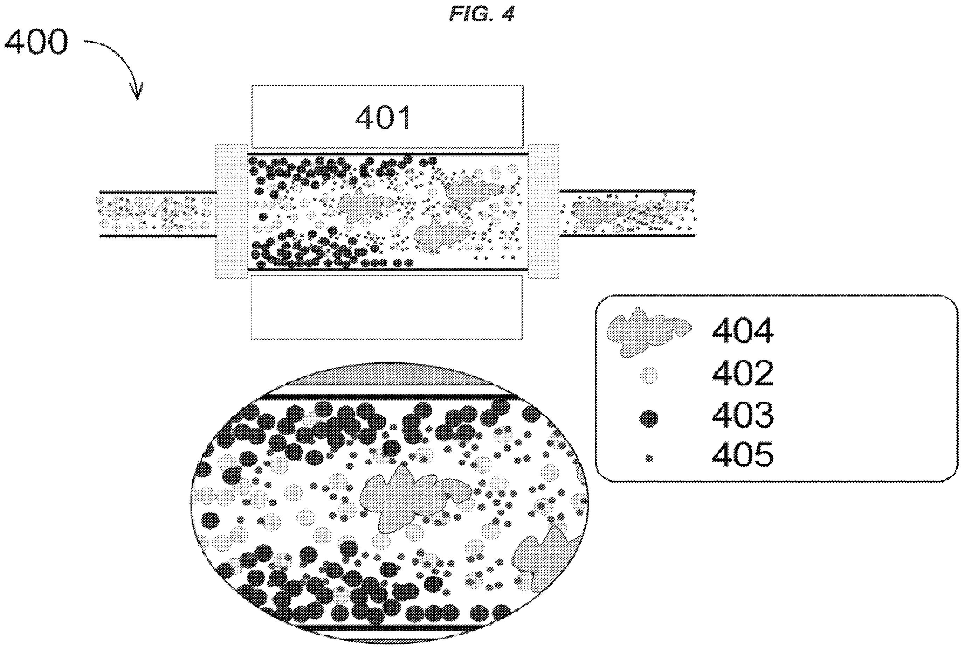

In certain embodiments, methods include magnetically depleting cellular debris from the disrupted biological sample. In these embodiments, cellular debris such as dead cells, cell fragments, free organelles, etc. are labelled by contacting the disrupted biological sample with a magnetic label (e.g., magnetically conjugated antibody) and removed from the disrupted biological sample by applying a magnetic field to the disrupted biological sample separating the labelled cellular debris from the disrupted biological sample. Where cellular debris is magnetically depleted from the disrupted biological sample, methods of the present disclosure are, in certain instances, sufficient to remove 75% or more of the cellular debris from the disrupted biological sample, such as 80% or more, such as 85% or more, such as 90% or more, such as 95% or more, such as 97% or more and including removing 99% or more of the cellular debris from the disrupted biological sample. FIG. 4 illustrates an example of magnetically depleting undesired or dead cells according to one embodiment of the present disclosure. Dead or undesired cells 403 are magnetically labelled, such as with a magnetically conjugated antibody and separated from cells 402 by applying a magnetic field with magnetic field source 401 to the sample flowing through a channel of the magnetic separation device 400. As illustrated in FIG. 4, magnetically labelled dead or undesired cells 403 remain in the flow channel while unlabeled cells 402, cell aggregates 404, and small molecules 405 (e.g., reagents) are flowed through and collected at an outlet of the magnetic separation device.

In other embodiments, methods include magnetically depleting undesired non-cellular macromolecules from the disrupted biological sample. In these embodiments, undesired non-cellular macromolecules, such as proteins, lipids, polysaccharides, tissue contaminants, etc., are labelled by contacting the disrupted biological sample with a magnetic label (e.g., nanoparticle having moieties reactive to proteins, lipids, polysaccharides, etc.) and removed from the disrupted biological sample by applying a magnetic field to the disrupted biological sample separating the undesired labelled non-cellular macromolecules from the disrupted biological sample. Where undesired non-cellular macromolecules are magnetically depleted from the disrupted biological sample, methods of the present disclosure are, in certain instances, sufficient to remove 75% or more of the undesired non-cellular macromolecules from the disrupted biological sample, such as 80% or more, such as 85% or more, such as 90% or more, such as 95% or more, such as 97% or more and including removing 99% or more of the undesired non-cellular macromolecules from the disrupted biological sample.

Aspects of the present disclosure may further include analyzing the collected cells. In some instances, analyzing the collected cells includes sorting the cells. For instance, methods may include counting or sorting the collected cells using a flow cytometer. Suitable flow cytometry systems and methods for analyzing and sorting samples of entrained single cells provided by the subject methods include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, the collected cells are analyzed using a BD Biosciences FACSCanto™ flow cytometer, a BD Biosciences Influx™ cell sorter, or the like.

In certain embodiments, cells obtained by the subject methods may be further used in research as a research specimen, for diagnostic laboratory testing or for therapeutic applications, as desired, with or without further purification. As discussed above, the biological sample may be any type of organismic tissue or biological fluid, both healthy and diseased (e.g., cancerous, malignant, necrotic, etc.). Accordingly, cells obtained from the processed biological sample may in certain instances be employed as a research or diagnostic specimen for diseases such as cancers including, but not limited to, acute lymphoblastic leukemia, acute myeloid leukemia, adrenocortical carcinoma, anal cancer, appendix cancer, astrocytoma, cerebral amphrogalyeponoisus, basal-cell carcinoma, bile duct cancer, cholangiocarcinoma, bladder cancer, bone tumor, osteosarcoma, malignant fibrous histiocytoma, brainstem glioma, cerebellar astrocytoma, cerebral astrocytoma/malignant glioma, ependymoma, medulloblastoma, supratentorial primitive neuroectodermal tumors, hypothalamic glioma, breast cancer, bronchial adenomas/carcinoids, burkitt's lymphoma,carcinoid tumor, cervical cancer, chronic bronchitis, chronic lymphocytic leukemia, chronic myelogenous leukemia, chronic myeloproliferative disorders, chronic obstructive pulmonary disease (COPD), colon cancer, cutaneous T-cell lymphoma, desmoplastic small round cell tumor, emphysema, endometrial cancer, ependymoma, esophageal cancer, Ewing's sarcoma, extracranial germ cell tumor, extrahepatic bile duct cancer, intraocular melanoma retinoblastoma, gallbladder cancer, gastrointestinal carcinoid tumor, gastrointestinal stromal tumor (GIST), germ cell tumor: extracranial, extragonadal, or ovarian, gestational trophoblastic tumor, glioma, hairy cell leukemia head and neck cancer, heart cancer, hepatocellular (liver) cancer, Hodgkin lymphoma, hypopharyngeal cancer, intraocular melanoma, islet cell carcinoma, Kaposi sarcoma, renal cell cancer, laryngeal cancer, leukemias, oral esophageal cancer, liposarcoma, lung cancer, lymphomas, Macroglobulinemia, Waldenstrom, medullablastoma, melanoma, Merkel cell carcinoma, mesothelioma, mycosis fungoides, myelodysplastic syndromes, nasopharyngeal carcinoma, neuroblastoma, oropharyngeal cancer, osteosarcoma, ovarian cancer, pancreatic cancer, paranasal sinus and nasal cavity cancer, parathyroid cancer, penile cancer, pheochromocytoma, pineal astrocytoma, pineal germinoma, pineoblastoma, prostate cancer, pleuropulmonary blastoma, rectal cancer, rhabdomyosarcoma, salivary gland cancer, sezary syndrome, nonmelanoma, melanoma, soft tissue sarcoma, squamous cell carcinoma, gastrointestinal cancer, T-cell lymphoma, testicular cancer, thyroid cancer, vaginal cancer.

In some embodiments, methods further include loading the collected cells into a container and transporting the cells to a remote location. For example, the cells may be loaded into a container configured for laboratory or medical diagnostic analysis (e.g., microtube, Eppendorf tube, test tube, syringe) and transported to a remote location (e.g., laboratory) for further processing or testing, as desired. By "remote location" is meant a location other than the location at which the cells are collected according to the subject methods. For example, a remote location could be another location (*e.g.*, office, lab, *etc.*) in the same city, another location in a different city, another location in a different state, another location in a different country, *etc.* As such, when one item is indicated as being "remote" from another, what is meant is that the two items are at least in different buildings, and may be at least one mile, ten miles, or at least one hundred miles apart, or as described above.

In yet other embodiments, cells obtained by the subject methods may be further used in therapy, being applied by any convenient mode of administration. Depending on the type of cells obtained, formulation of the therapeutic agent may vary. Methods for preparing pharmaceutical formulations may include those described in "Remington: The Science & Practice of Pharmacy", 19th ed., Williams & Williams, (1995), the "Physician's Desk Reference", 52nd ed., Medical Economics, Montvale, NJ (1998), and Kibbe, A.H., Handbook of Pharmaceutical Excipients, 3rd Edition, American Pharmaceutical Association, Washington, D.C., 2000.

For example, formulations having the collected cells may take the form of an injection, e.g., powders or lyophilates that can be reconstituted with a solvent prior to use, as well as ready for injection solutions or suspensions, dry insoluble compositions for combination with a vehicle prior to use, and emulsions and liquid concentrates for dilution prior to administration. In embodiments where the collected cells are formulated for injection, diluents may include, but is not limited to bacteriostatic water, dextrose 5% in water, phosphate buffered saline, Ringer's solution, saline, sterile water, deionized water, and any combinations thereof. Alternatively, the collected cells may be formulated for use in therapy in the form of a liquid solution or suspension, syrup, cream, ointment, tablet, capsule, powder, gel, matrix, suppository, or any combination thereof.

### SYSTEMS FOR PROCESSING A BIOLOGICAL SAMPLE

The present disclosure further include systems for practicing the methods. The system according to the invention is defined by claim 17. In certain aspects, systems further include a magnetic separation device, a second acoustic concentrator device or any combination thereof.

As summarized above, the present disclosure include processing a biological sample to obtain individual cells from the biological sample. The subject systems are configured to facilitate the production of cell samples that exhibit low entrainment. Entrainment is a measure of the degree of aggregation of components (e.g. cells) in a liquid sample, defined as the ratio of the observed distribution of the component over the expected distribution based on a normal Poisson distribution. In certain aspects, the subject device may facilitate the production of samples with an entrainment factor of 2.0 to 0.0, such as 1.5 to 0.0, including 1.0 to 0.0, 0.75 to 0.0, 0.5 to 0.0, 0.4 to 0.02, or 0.25 to 0.0, where a value of 1.0 represents a normal Poisson distribution, less than one is more ordered than predicted by Poisson statistics and values greater than 1 reflect sample aggregation.

As such, systems according to certain embodiments are configured to break up an organ, tissue, tissue fragment and cell aggregates to collect cells from the organ, tissue, tissue fragment or cell aggregates. In certain embodiments, systems of interest are configured to separate cells from non-cells, separate cells from cellular debris (e.g., cell fragments, fragmented cell membranes, organelles, dead or lysed cells) as well as separate cells from non-cellular macromolecules such as connective tissue, lipids, proteins and nucleic acid fragments. As noted above, biological samples may be any type of organismic tissue, including both healthy and diseased tissue (e.g., cancerous, malignant, necrotic, etc.) In certain instances, systems are configured to obtain diseased (e.g., cancer) cells from a biological fluid or tissue sample.

The subject devices is configured as a flow-through device for analyzing liquid samples. By "flow-through" is meant that a liquid sample may enter the device through an inlet, be carried through the device in a flow path, such as a conduit, and then exit the device through an outlet. The device may be configured to carry a continuous stream of the sample through the device and continuously separate magnetically labeled moieties in the sample as the sample flows through the device, and/or continuously separate particles (e.g., cells) based on the acoustic contrast factors (also called an Φ-factor; described below) of the particles as the sample flows through the acoustic concentrator portion of the device. Each of the disrupter, acoustic concentration device and magnetic separation device may have 1 or more inlets and outlets as desired. For example, each of the disrupter, acoustic concentration device and magnetic separation device may individually include 1 or more inlets, such as 2 or more inlets, such as 3 or more inlets and including 5 or more inlets. In certain embodiments, each of the disrupter, acoustic concentration device and magnetic separation device individually include between 1 and 5 inlets, such as between 2 and 4 inlets and including 3 inlets. Likewise, each of the disrupter, acoustic concentration device and magnetic separation device may individually include 1 or more outlets, such as 2 or more outlets, such as 3 or more outlets and including 5 or more outlets. In certain embodiments, each of the disrupter, acoustic concentration device and magnetic separation device individually include between 1 and 5 outlets, such as between 2 and 4 outlets and including 3 outlets.

The number of inlets and outlets may be the same or different for each of the element of the subject systems. For example, in one instance the subject device includes a disrupter which has 1 inlet and 1 outlet and an acoustic concentrator device which has 3 inlets and 3 outlets. In another embodiment, the subject device includes a magnetic separation device which has 1 inlet and 2 outlets and an acoustic concentrator device which has 2 inlets and 2 outlets.

Each of the inlets may be configured for introducing any component into the subject devices, such as for example the biological sample, magnetic particles, reagents, solvents and buffers. Where the device includes more than one inlet, each inlet may be employed to introduce the same or different components. For example, one inlet may be employed to introduce fluidic sample while one or more alternate inlets may be employed for introducing a wash buffer or sheath fluid. Each desired component may be introduced into the inlet manually (e.g., by syringe or syringe pump) or by one or more injectors (e.g., computer controlled injection systems, peristaltic pump systems, etc.).

The flow rate through each part of the subject system may vary depending on the desired separation, concentration or subsequent analysis in fluid communication with the subject system, as described in greater detail below. In certain embodiments, the system is configured to have a flow rate of 1 µL/min or more, such as 10 µL/min or more, including 30 µL/min or more, or 40 µL/min or more, or 50 µL/min or more, or 60 µL/min or more, or 80 µL/min or more, or 100 µL/min or more, or 200 µL/min or more, or 300 µL/min or more, or 400 µL/min or more, or 500 µL/min or more, or 750 µL/min or more, or 1 mL/min or more, or 2 mL/min or more, or 5 mL/min or more, or 10 mL/min or more, or 100 mL/min to 1L/min. In certain aspects, where the system is coupled to a cell sorter or flow cytometer, the flow rate of the system is such that output from the system is optimal for subsequent analysis using the cell sorter or flow cytometer, such as 20 to 150 µL/min, including 30 to 100 µL/min, such as 40 to 60 µL/min.

In some embodiments, the subject systems are configured to provide a constant flow rate. By "constant flow rate" is meant that the rate of fluid flow through the system increases or decreases by 2% or less, such as by 1.5% or less, such as by 1% or less, such as 0.5% or less, such as 0.5% or less and including changes by 0.1% or less. Where the system also includes a magnetic separation device and a second acoustic concentrator device, the system may be configured to provide a constant flow rate through one or more of the acoustic concentrator device, magnetic separation device and the second acoustic concentrator device. For example, the system may be configured to provide a constant flow rate through only the first acoustic concentrator device. Alternatively, the system may be configured to provide a constant flow rate through all parts of the system.

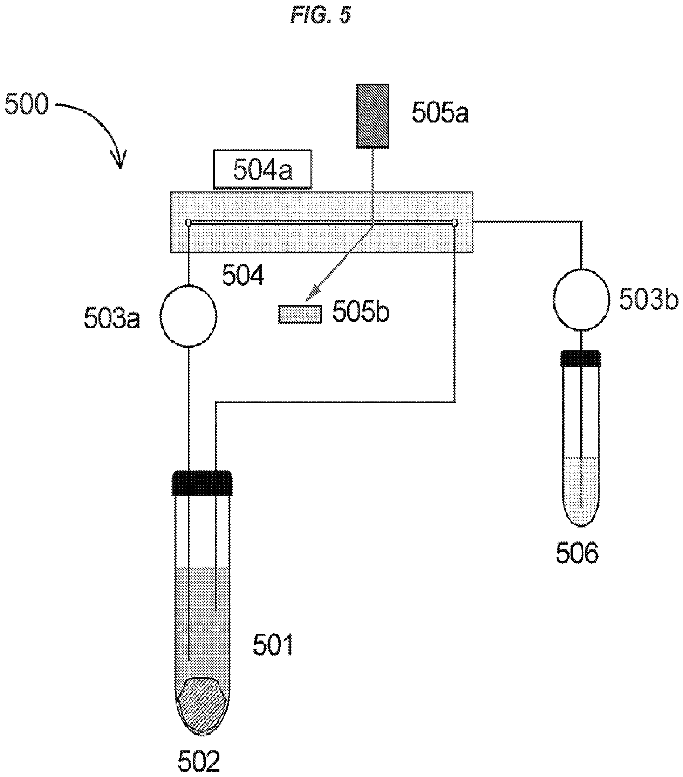

The system according to the invention includes a sample disrupter for producing a disrupted biological sample and an acoustic concentrator device to separate larger components of the disrupted biological sample (e.g., tissue, tissue fragments, cell aggregates, etc.) from smaller components (individual cells, cell debris, non-cellular macromolecules) to produce a processed biological sample. FIG. 5 shows a schematic of a system for processing a biological sample according to certain embodiments of the present disclosure. System 500 includes sample disrupter 502 for disrupting a biological sample 501. The disrupted biological sample 501a is flowed using pump 503a through acoustic concentrator device 504 having piezoelectric transducer 504a to separate larger components of the disrupted biological sample from smaller components to produce processed biological sample 501b. Processed biological sample 501b is assessed with a feedback monitor having laser light source 505a and laser scatter detector 505b to determine the extent of aggregation in the processed biological sample. Processed biological sample 501b is subsequently directed through one or more outlets from acoustic concentrator device 504 where the larger components which require further processing (e.g., tissue, tissue fragments, cell aggregates, etc.) are fed back into sample disrupter 502, while the smaller components (e.g., individual cells, cell debris and non-cellular macromolecules) are collected in storage reservoir 506 using pump 503b. The system according to the invention also includes a feedback monitoring.

As described in greater detail below, systems may also include additional devices for practicing the subject methods, such as a magnetic separation device and a second acoustic concentrator device. Moreover, systems may also include additional components such as , one or more valves (e.g., pinch valves, and the like), reservoirs (e.g., sample reservoirs, wash reservoirs, waste reservoirs, and the like), pumps (e.g., syringe pumps, peristaltic pumps, and the like), connective tubing (e.g., silicone tubing), housings, processors, and the like.

Components of the subject systems may be fluidically connected to each other by one or more conduits. In certain aspects, the conduit is enclosed, such that the conduit is defined by outer walls that surround a central flow path. The central flow path may be aligned with a longitudinal axis of the conduit. The central flow path may have any convenient shape, such as, but not limited to, a flow path with a cross-sectional profile of a circle, an ellipse, a square, a rectangle, a pentagon, a hexagon, an irregular cross-sectional profile, combinations thereof, and the like. In certain embodiments, the conduit may have a height (e.g., for conduits that do not have a round cross-sectional profile) or an inner diameter (e.g., for conduits that have a round cross-sectional profile) of 5 cm or less, such as 2 cm or less, including 1 cm or less, or 7 mm or less, or 5 mm or less, or 3 mm or less, or 2 mm or less, or 1 mm or less. The length of the conduit may range from 1 cm to 1000 cm, such as from 2 cm to 750 cm, including from 5 cm to 500 cm, or from 5 cm to 250 cm, or from 10 cm to 100 cm, such as from 10 cm to 50 cm, for example from 10 cm to 25 cm.

Conduits of interest may include one or more flow paths, as desired. Depending on the number of outlets and inlets on each component, conduits may include 2 or more flow paths, such as 3 or more flow paths and including 5 or more flow paths. For example, the conduit positioned between the sample disrupter and the acoustic concentrator device may include from 2 to 5 flow paths, such as 3 flow paths.

The systems may generally include the subject fluidic devices as described herein and a processor configured to control the one or more fluidic devices. These components may be integrated into the same article of manufacture as a single unit, or distributed among two or more different units (e.g., as a system) where the two or more different units are in communication with each other, e.g., via a wired or wireless communication protocol.

The subject systems can be configured to for practicing the subject methods are any suitable temperature so long as the viability of the cells collected is preserved as desired. As such, systems may be configured to provide a temperature which ranges, such as from - 80 °C to 100 °C, such as from -75 °C to 75 °C, such as from -50 °C to 50 °C, such as from - 25 °C to 25 °C, such as from -10 °C to 10 °C, and including from 0 °C to 25 °C.

Various aspects of the embodiments of each component of the subject systems shall now be described in greater detail below.

### Biological Sample Disrupter

The system according to the invention includes one or more biological sample disrupters. In embodiments of the present disclosure, biological sample disrupters are configured to break up or disaggregate a biological sample in a manner sufficient to release cells present in the biological sample so that the cells may be subsequently separated and collected. Any suitable sample disrupting protocol may be employed so long as it is capable of breaking up the biological sample to release cells without lysing or destruction of the cells. Suitable sample disrupters may include grinders, blenders, mechanical and manual homogenizers, sonicators, vortexers, mills, mortar and pestles as well as sample disrupters employing shearing, beating or shocking protocols, among other types of sample disrupters.

In some embodiments, biological sample disrupters include an enzymatic disrupter. Enzymatic disrupters of interest may include, but are not limited to, proteolytic and biomolecule digestive enzymes capable of digesting desmosomes, tissue stromal elements as well as extracellular and intercellular adhesions. For example, proteolytic enzymes of interest for disaggregating tissue may include trypsin, pepsin, papain, collagenase, elastase, hyaluronidase, pronase, chymotrypsin, catalase, dispase, as well as DNase. The amount of enzymatic disrupter employed will also vary depending on the type and size of the biological sample, as well as extent of disaggregation desired and ranges from 0.001 mg/mL to 1000 mg/mL, such as from 0.005 mg/mL to 500 mg/mL, such as from 0.01 mg/mL to 250 mg/mL, such as from 0.05 mg/mL to 100 mg/mL, such as from 0.1 mg/mL to 90 mg/mL, such as from 0.5 mg/mL to 75 mg/mL, such as from 1 mg/mL to 50 mg/mL and including from 5 mg/mL to 25 mg/mL.

In other embodiments, biological sample disrupters include a chemical disrupter. Chemical disrupters of interest may include, but are not limited to chelating, complexing or sequestration agents capable of disrupting desmosomes, tissue stroma, as well as intercellular adhesion and cell-surface integrity. In certain embodiments, chemical disrupters are configured to omit or sequester calcium or magnesium ions in a manner sufficient to interfere with intercellular adhesion and cell-surface integrity. For example, chemical disrupters of interest may include a chelating agent such as of ethylene diamine tetra acetic acid (EDTA), ethyleneglycol-bis-(beta-aminoethyl ether) N,N,N',N'-tetraacetic acid (EGTA), 2,3-dimercaptopropanel- 1 -sulfonic acid (DMPS), and 2,3-dimercaptosuccinic acid (DMSA), bidentate phosphines such as 2,2'-bis(diphenylphosphino)-1,1'-binaphthyl (BINAP), bisphosphonates and citric acid. The amount of chemical disrupter employed will also vary depending on the type and size of biological sample, as well as extent of disaggregation desired and ranges from 0.001 mg/mL to 1000 mg/mL, such as from 0.005 mg/mL to 500 mg/mL, such as from 0.01 mg/mL to 250 mg/mL, such as from 0.05 mg/mL to 100 mg/mL, such as from 0.1 mg/mL to 90 mg/mL, such as from 0.5 mg/mL to 75 mg/mL, such as from 1 mg/mL to 50 mg/mL and including from 5 mg/mL to 25 mg/mL.

In some embodiments, systems include a mechanical tissue disrupter that is configured to break down an organ, tissue or collection of tissue fragments. As discussed above, mechanical tissue disrupters may be any convenient device used to break down tissue to release cells present in the tissue. For example, mechanical tissue disrupters include, grinders, blenders, homogenizers and as well tissue shears and tissue beaters.

In other embodiments, systems include a cell aggregate disrupter configured to break up agglomerated cells in the biological sample. Cell aggregate disrupters may be any convenient device which is capable of breaking up agglomerated cells into a collection of individual cells. For example, in these embodiments cell aggregate disrupters of interest may include a mill, vortexer or a sonicator.

In certain embodiments, the biological sample disrupter is a container or contacting apparatus which allows the biological sample to be contacted with an enzymatic or chemical disrupter. For example, in some embodiments, the contacting apparatus is a sample chamber (e.g., enclosed, sealed, air-tight, open, plate, etc.). In other embodiments, the contacting apparatus is container such as for example a test tube, centrifuge tube, culture tube, microtube, syringe, pipette, petri dish, flask, beaker, cuvette, or bottle.

The subject systems can include any desired number of biological sample disrupters, including two or more disrupters, such as 3 or more and including 4 or more disrupters. Each disrupter may be the same or different and may be arranged in any convenient configuration, such as in a serial configuration, parallel configuration, or a combination of the two.

Biological sample disrupters of interest may, in certain instances, be configured as a flow-through device. The flow-through biological sample disrupter may be configured to include a chamber for disrupting the biological sample as the biological sample flows through the device as well as one or more conduits for carrying the biological sample in and out of the disrupter. The disrupter may have 1 or more inlets and outlets as desired. For example, the disrupter may have 1 or more inlets, such as 2 or more inlets, such as 3 or more inlets and including 5 or more inlets. In certain embodiments, the disrupter includes between 1 and 5 inlets, such as between 2 and 4 inlets and including 3 inlets. The disrupter may also 1 or more outlets, such as 2 or more outlets, such as 3 or more outlets and including 5 or more outlets. In certain embodiments, the disrupter includes between 1 and 5 outlets, such as between 2 and 4 outlets and including 3 outlets. Where systems include more than one biological sample disrupter, the number of inlets and outlets may be the same or different for each disrupter.

### Acoustic Concentrator Device

The system according to the invention includes one or more acoustic concentrator devices. Acoustic concentrator devices of interest are configured as a flow-through device. The flow-through acoustic concentrator may be configured to include one or more channels for carrying the biological sample in and out of the acoustic concentrator. Channels may have any convenient configuration. While the cross sectional shape may vary, in some instances, cross-sectional shapes of channels of interest include, but are not limited to: rectilinear cross sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion, etc. The dimensions of the channel in the acoustic concentrator may vary, such as from 100-550 µm x 50-250 µm x 20-100mm, such as 150-500 µm x 75-200 µm x 25-75 mm, such as 200-400 µm x 100-200 µm x 30-60 mm.

The acoustic concentrator may have 1 or more inlets and outlets as desired. For example, the disrupter may have 1 or more inlets, such as 2 or more inlets, such as 3 or more inlets and including 5 or more inlets. In certain embodiments, the disrupter includes between 1 and 5 inlets, such as between 2 and 4 inlets and including 3 inlets. The disrupter may also 1 or more outlets, such as 2 or more outlets, such as 3 or more outlets and including 5 or more outlets. In certain embodiments, the disrupter includes between 1 and 5 outlets, such as between 2 and 4 outlets and including 3 outlets.

In some embodiments, acoustic concentrator devices may include, but are not limited to, those described in United States Patent Application Serial No. 14/061,678 filed on October 23, 2013 and published as US20140120570, United States Patent No. 6,929,750; Laurell, et al. (2007) Chem. Soc. Rev., 2007, 36, 492-506; Petersson, et al. (2005) Analytical Chemistry 77: 1216-1221; and Augustsson, et al. (2009) Lab on a Chip 9: 801-818. In these embodiments, the acoustic concentrator devices operate in accordance with the Lund-method, where particles in the disrupted biological sample of different sizes are acoustically separated in a laminar flow microchannel ultrasonically actuated using an acoustic field generator (e.g., a piezoelectric ceramic). In certain embodiments, the width of the channel corresponds to half the desired ultrasonic wavelength, creating a resonator between the side walls of the flow channel in which a standing wave can be formed. In these embodiments, the induced standing wave is generated orthogonal to the incident ultrasonic wave front. Larger components of the disrupted biological sample with a positive Φ-factor are moved during flow through the channel, by means of the axial primary radiation force (PRF), towards the pressure nodal plane along the channel center, while smaller components of the disrupted biological sample remain close to the side walls. Separation of the larger components from the smaller components is, in certain instances, completed by a split channel outlet configured to collect the separated larger components through a center outlet and the smaller components through one or more side outlets. In some embodiments, the acoustic standing wave is focused to the center of the flow channel. In these embodiments, the acoustic standing wave is configured to propagate within the channel applying an acoustic radiation pressure within the flow channel. In certain instances, the applied acoustic standing wave does not propagate outside of the flow channel. In certain embodiments, the acoustic field is applied only in a single direction by the vibration transducer. As such, in these embodiments the vibration transducer does not simultaneously apply acoustic fields in two or more different directions.

In some embodiments, the disrupted biological sample begins by flowing along the sides of the channel. An acoustic standing wave may be induced in the channel (e.g., using an acoustic field generator, such as a piezoelectric transducer, placed adjacent to the channel). The acoustic standing wave creates a pressure node in the center of the channel. An acoustic radiation force is exerted on larger components in the disrupted biological sample, such as tissue, tissue fragments and agglomerated cells, and these components are moved towards the center of the channel (i.e., the node of the acoustic standing wave), where these components are carried through the channel by a laminar flow of wash buffer. Smaller components in the disrupted biological sample, such as individual cells, cellular debris and non-cellular macromolecules are retained along the walls of the channel and are carried by a different laminating flow of buffer. In these embodiments, by applying the acoustic standing wave to the disrupted biological sample, larger components are separated from smaller components in the disrupted biological sample within the channel of the acoustic concentrator device.

Since in these embodiments, the fluidic flow through the acoustic concentrator device is configured to be laminar, when an acoustic field is applied tissue, tissue fragments, tissue aggregates, cell aggregates and other agglomerated components of the disrupted biological sample are forced to the center of the channel into a laminate of flowing wash buffer (i.e., the node of the acoustic standing wave). These components exit the acoustic concentrator device through a dedicated sample outlet while cells from the disrupted biological sample retained in parallel laminating sample streams along the channel wall may be directed to two or more alternate sample outlets.

Acoustic concentrator devices may be manufactured from any convenient rigid material. In certain aspects, one or more flow channels are made by etching (e.g., anisotropically etching) a channel in silicon, steel, glass (e.g., Pyrex glass), Poly(methyl methacrylate), polycarbonate, or any other convenient material. The channel(s) may be sealed using a membrane sealed atop the channel. Any convenient membrane type may be used, such as glass (e.g., boron silica glass). In certain embodiments, the flow channel consists of pyrex glass. In other embodiments, the flow channel consists of boron silica glass. In some embodiments, the flow channel does not include any reflective surfaces within or along the surface which may be configured for reflecting or altering the propagation of the acoustic wave. In other embodiments, the flow channel does not include any capture agents or surface etching for trapping particles along the surface of the flow channel.

In certain aspects, an acoustic field generator is bonded to the bottom of the channel. Acoustic field generators of interest include, but are not limited to, piezoelectric transducers such as PZT. In certain aspects, the piezoelectric transducer is of the multi-layer type, but a bimorph piezoelectric element may also be used as well as any other kind of ultrasound generating element with suitable dimensions. In some embodiments, the vibration transducer and the flow channel may be integrated together in the acoustic concentrator device. In these embodiments, the vibration transducer and the flow channel form a single component acoustic concentrator device.

The acoustic field generator may be of any desirable shape, and in some instances may be a cube or bar-shaped piezoelectric transducer. In certain embodiments, the acoustic field generator is a cube or bar-shaped piezoelectric transducer having a substantially flat face positioned proximal to the conduit of the acoustic concentrator device. By "having a substantially flat face" is meant that the acoustic field generator does not wrap (wholly or partially) around the conduit of the acoustic concentrator device. As such, in these embodiments, the acoustic field generator is bar-shaped or cube-shaped having one of the flat edge faces positioned proximal to the conduit. In certain embodiments, the frequency of the acoustic wave that is applied corresponds to the fundamental resonance mode of the vibration transducer (e.g., about 2MHz for many PZT plates). The frequency may, in some embodiments, instead correspond to a harmonic of the vibration transducer, such as a first harmonic, second harmonic, and the like. In various aspects, the frequency applied may be about 1.5 MHz or more, such as 2 MHz or more, such as 2.5 MHz or more, such as 3 MHz or more, such as 3.5 MHz or more, such as 4 MHz or more, such as 4.5 MHz or more, such as 5 MHz or more, such as 5.5 MHz or more and including about 6 MHz or more. For example, the frequency of applied acoustic wave may range from 1.0 MHz to 6MHz, such as from 1.5 to 5.5 MHz, such as from 2 MHz to 5 MHz, such as from 2.5 to 4.5 MHz and including from 3 MHz to 4 MHz. An upper limit for the frequency of the applied acoustic wave may, in certain instances, be 10 MHz or less, such as 7.5 MHz or less, and including 5 MHz or less.

In certain embodiments, the amplitude of acoustic wave remains constant when applied to the sample flow in the acoustic concentrator device. As such, in these embodiments, the amplitude of the applied acoustic wave is configured to increase or decrease by 2% or less when applied to the sample flow in the acoustic concentrator device, such as by 1.5% or less, such as by 1% or less, such as by 0.5% or less, such as by 0.25% or less, such as by 0.1% or less, such as by 0.05% or less and including 0.01% or less.

The acoustic pressure amplitude of the acoustic wave applied may vary depending on the density and rate of particles and fluid flowing through the acoustic concentrator device and may range from 0.01 MPa to 1 MPa, such as from 0.05 MPa to 0.95 MPa, such as from 0.1 MPa to 0.9 MPa, such as from 0.2 MPa to 0.8 MPa and including from 0.25 MPa to 0.75 MPa..

The activation voltage that is applied may also vary. For example, in certain aspects an activation voltage is 0.1 Vₚₚ to 100 Vₚₚ or higher, such as 0.1 Vₚₚ to 1 Vₚₚ, 1 Vₚₚ to 10 Vₚₚ, 10 Vₚₚ to 20 Vₚₚ, 20 Vₚₚ to 30 Vₚₚ, 30 Vₚₚ to 40 Vₚₚ, 40 Vₚₚ to 50 Vₚₚ, 50 Vₚₚ to 75 Vₚₚ, 75 Vₚₚ to 100 Vₚₚ, or 100 Vₚₚ or higher.

In certain embodiments, an acoustic concentrator device is controlled by a processor configured to control the acoustic field generator. The processor may be contained within a control unit or control box. For instance, the processor may be configured to control the acoustic field generator by altering one or more of the shape, frequency and power of the electrical energy delivered to the acoustic field generator.

The flow rate of an acoustic concentrator device may vary. In certain embodiments, the flow rate of the acoustic concentrator device is adjusted such that the output from the acoustic concentrator device is optimal for feedback monitoring (as described above), such as 20 to 150 µL/min, including 30 to 100 µL/min, such as 40 to 60 µL/min. The flow rate of the acoustic concentrator device may be adjusted such that the output from the acoustic concentrator device is optimal for subsequent analysis by a particular device, such as a cell sorter. In certain aspects, the acoustic concentrator device is used to reduce the flow rate from another component of the system, such as a magnetic separator as described below, such that the output from the acoustic concentrator device is optimal for subsequent analysis.

In certain aspects, the flow rate of an acoustic concentrator device may be controlled by modulating one or more pumps (e.g., a syringe pump, such as a WPI sp210iwz distributed by World Precision Instruments Inc., Sarasota, FL) or valves (e.g., pinch valves). The flow rate may, in certain embodiments, be controlled by a processor, such as a processor described above.

In certain aspects, the rate at which one or more acoustic concentrator devices separate larger components from smaller components in the disrupted biological sample is 1 µl/min or more. For example, in certain embodiments the rate is 10 µl/min or more, including 10 µl/min to 50 µl/min, 50 µl/min to 100 µl/min, 100 µl/min to 200 µl/min, 200 µl/min to 300 µl/min, 300 µl/min to 400 µl/min, 400 µl/min to 500 µl/min, 500 µl/min to 600 µl/min, 600 µl/min to 700 µl/min, 700 µl/min to 800 µl/min, 800 µl/min to 900 µl/min, 900 µl/min to 1 ml/min, 1 ml/min to 10 ml/min, 10 ml/min to 20 ml/min, 20 ml/min to 30 ml/min, 30 ml/min to 40 ml/min, 40 ml/min to 50 ml/min, 50 ml/min to 60 ml/min, 60 ml/min to 70 ml/min, 70 ml/min to 80 ml/min, 80 ml/min to 90 ml/min, 90 ml/min to 100 ml/min, 100 ml/min to 150 ml/min, 150 ml/min to 200 ml/min, 200 ml/min to 500 ml/min, or 500 ml/min to 1 L/min.

In certain embodiments, the subject acoustic concentrator devices are configured to separate components of the disrupted biological sample based on size. For example, depending on the components of the disrupted biological sample, the acoustic concentrator device may be configured separate out components which have diameters of 5 µm or greater, such as 10 µm or greater, such as 25 µm or greater, such as 50 µm or greater and including 100 µm or greater, such as from 10 to 25 µm, such as from 25 to 50 µm, such as from 50 to 75 µm and including from 75 to 100 µm. In some embodiments, the acoustic concentrator is configured to vary acoustic wave frequency and amplitude in a manner sufficient to separate tissue, tissue fragments and cell aggregates from individual cells, cellular debris and non-cellular macromolecules in the disrupted biological sample. In other embodiments, the acoustic concentrator is configured to vary acoustic wave frequency and amplitude in a manner sufficient to separate individual cells from cellular debris and non-cellular macromolecules in the disrupted the biological sample.

In some instances, to achieve a desired flow rate a plurality of parallel separation channels may be used in the acoustic concentrator device. For example, in certain embodiments two or more parallel separation channels are used, including 3 or more, such as 5 or more, 8 or more, 15 or more, 25 or more, 40 or more, 60 or more, 80 or more, 100 or more, 125 or more, 150 or more, 200 or more, 300 or more, 400 or more, 500 or more, or 1000 or more. The separation channels may be contained on one or more chips, such as 2 or more, 5 or more, 10 or more, 20 or more, 50 or more, or 100 or more. Moreover, a plurality of vibration transducers may be used, such as 2 or more, 5 or more, or 10 or more. In certain embodiments, the acoustic concentrator device includes a single transducer, such as a single piezoelectric transducer.

In some embodiments, the subject systems may contain two or more acoustic concentrator devices, such as 3 or more, including 4 or more, 5 or more, 6 or more, or 7 to 10. Where systems include 2 or more acoustic concentrator devices, the acoustic concentrator devices may be arranged in any convenient configuration, such as in a serial configuration, parallel configuration, or a combination of the two. Moreover, when a subject device contains 2 or more acoustic concentrator devices, the acoustic concentrator devices may be substantially identical, identical, or heterogeneous (e.g., differ in one or more ways, such as in the dimensions of the flow channel, the applied voltage, the oscillation frequency, etc.). Where systems include more than one acoustic concentrator device, the number of inlets and outlets may be the same or different for each acoustic concentrator.

In certain instances, the subject systems include at least two acoustic concentrator devices, where a first acoustic concentrator device, as described above, is configured to separate larger components (e.g., tissue, tissue aggregates, cell aggregates) from smaller components (cells, cellular debris, non-cellular macromolecules) in the disrupted biological sample and a second acoustic concentrator device configured to separate cells from cellular debris and non-cellular macromolecules in cell samples collected from the first acoustic concentrator device. Cell samples are conveyed from an output of the first acoustic concentrator device to an input of the second acoustic concentrator device through one or more conduits. In certain embodiments, cellular debris and non-cellular macromolecules are carried through the second acoustic concentrator device along the sides of the channel while cells are focused to the center of the channel. The fluid carrying the cellular debris and non-cellular macromolecules and the fluid carrying the cells operate under laminar flow.

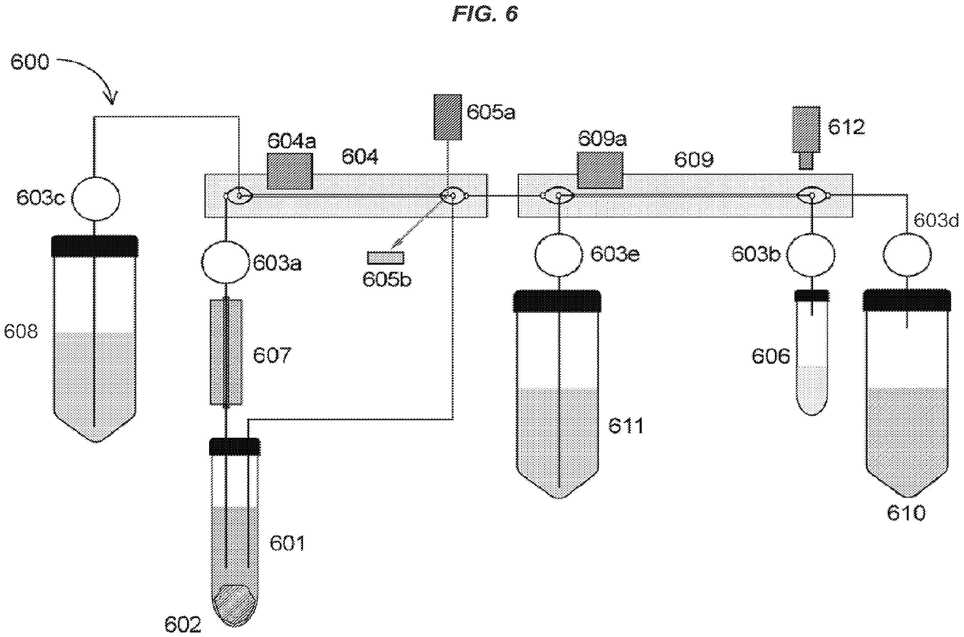

A transducer is positioned proximal to the conduit and is activated to create an acoustic standing wave. In these embodiments, the applied standing wave exerts acoustic radiation pressure to the cells sufficient to move the cells towards the pressure node formed at the center of the conduit (e.g., to a focusing zone in the flowing buffer). In embodiments of the present disclosure, the applied acoustic standing wave is sufficient to separate the cells from cellular debris such as dead or lysed cells, cell fragments and free organelles as well as from non-cellular macromolecules such as enzymes, proteins lipids and nucleic acid fragments. For example, methods may include concentrating the cells at the node of the acoustic standing wave in the flow buffer while retaining enzymes and non-cellular molecules used in disrupting the biological sample (i.e., enzymatic disrupters) along the sides of acoustic concentrator device conduit. The cells are then carried out of the second acoustic concentrator device and collected through a center outlet. The separated cellular debris and non-cellular macromolecules are carried out of the second acoustic concentrator device and collected through two or more side outlets. An example of separating cells from cellular debris and non-cellular macromolecules using a second acoustic concentrator device according is illustrated in FIG. 6. In particular, FIG. 6 illustrates a schematic of a system for processing a biological sample having a magnetic separator device, a first acoustic concentrator device and a second acoustic concentrator device. System 600 includes sample disrupter 602 for disrupting a biological sample 601. The disrupted biological sample is flowed using pump 603a through magnetic separator device 607 positioned between and in fluidic communication with sample disrupter 602 and first acoustic concentrator device 604 having piezoelectric transducer 604a to separate larger components of the disrupted biological sample from smaller components to produce processed biological sample. Processed biological sample 601b is assessed with a feedback monitor having laser light source 605a and laser scatter detector 605b to determine the extent of aggregation in the processed biological sample. Processed biological sample is subsequently directed through one or more outlets from acoustic concentrator device 604 where the larger components which require further processing (e.g., tissue, tissue fragments, cell aggregates, etc.) are fed back into sample disrupter 602, while the smaller components (e.g., cells, cell debris and non-cellular macromolecules) are conveyed to second acoustic concentrator 609 having a second piezoelectric transducer 609a to separate cells from cellular debris and non-cellular macromolecules. Cells separated from the cellular debris and non-cellular macromolecules are conveyed to storage reservoir 606 using pump 603b while cellular debris and non-cellular macromolecules is conveyed using pump 603d to waste container 610. System 600 also includes disaggregation buffer 608 conveyed using pump 603c through the first acoustic concentrator device for separating larger components from smaller components in the disrupted biological sample and wash buffer 611 conveyed using pump 603e through the second acoustic concentrator device for separating cells from cellular debris and non-cellular macromolecules. Separated cells conveyed to storage reservoir 606 may be imaged using imaging detector 612.

Acoustic concentrator devices as described above may in some aspects also contain one or more additional components. Examples of such components include, but are not limited to, one or more valves (e.g., pinch valves, and the like), reservoirs (e.g., sample reservoirs, wash reservoirs, waste reservoirs, and the like), pumps (e.g., syringe pumps, peristaltic pumps, and the like), connective tubing (e.g., silicone tubing), housings, processors, and the like.

### Magnetic Separation Device

In certain embodiments, systems further include a magnetic separation device. Magnetic separation devices of interest are configured to separate magnetically labeled moieties from non-magnetically labeled moieties (e.g., moieties that are not associated with a magnetic label) in the disrupted biological sample.

Flow through the magnetic separator device may, in certain instances, be substantially free of laminar flow. By substantially free of laminar flow is meant that fluidic flow through the conduit of the magnetic separator device is characterized by a single flow stream and is absent any laminating flow streams. As such, in these embodiments, fluidic sample is flowed through the magnetic separation device in the absence of laminating sheath fluids. The fluid dynamics of fluidic flow through the magnetic separator device may be characterized by substantially turbulent flow. The term "turbulent flow" is used in its conventional sense to mean that fluid flow is a single flow which does not include any laminating flow such as laminar wash buffer flow.

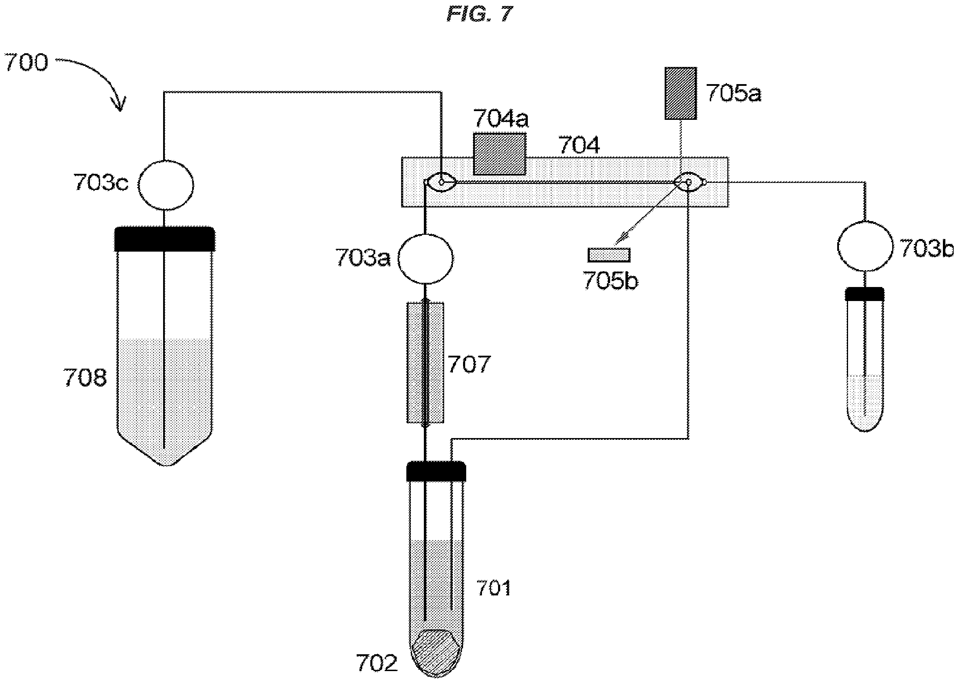

FIG. 7 illustrates a schematic of a system for processing a biological sample having a magnetic separator device according to certain embodiments of the present disclosure. System 700 includes sample disrupter 702 for disrupting a biological sample 701. The disrupted biological sample is flowed using pump 703a through magnetic separator device 707 positioned between and in fluidic communication with sample disrupter 702 and acoustic concentrator device 704 having piezoelectric transducer 704a to separate larger components of the disrupted biological sample from smaller components to produce the processed biological sample. Processed biological sample is assessed with a feedback monitor having laser light source 705a and laser scatter detector 705b to determine the extent of aggregation in the processed biological sample. Processed biological sample is subsequently directed through one or more outlets from acoustic concentrator device 704 where the larger components which require further processing (e.g., tissue, tissue fragments, cell aggregates, etc.) are fed back into sample disrupter 702, while the smaller components (e.g., individual cells, cell debris and non-cellular macromolecules) are collected in storage reservoir 706 using pump 703b. System 700 also includes disaggregation buffer 708 for flowing buffer using pump 703c through acoustic concentrator device to separate larger components from smaller components in the disrupted biological sample.

Examples of magnetic separation devices of interest include, but are not limited to, those described in United States Patent Application Serial No. 14/061,678 filed on October 23, 2013 published as US20140120570, U.S. Patent Nos. 5,945,281, 6,858,440; 6,645,777; 6,630,355; and 6,254,830; U.S. Patent Application No. PCT/US2012/032423 published as WO2012032423; and Hoeppener, et al. (2012) Recent Results Cancer Res. 195:43-58.

Magnetic separation devices may include one or more magnetic field sources configured to produce a magnetic field. In certain cases, the magnetic field source produces an inhomogeneous magnetic field. By "inhomogeneous" is meant that the magnetic field has a magnetic field gradient, where the strength of the magnetic field is different depending on the position within the magnetic field. For instance, the magnetic field may have a magnetic field gradient, where the magnetic field strength is greater at one area and gradually decreases at positions further away from that area. Thus, the magnetic field source may be configured to produce a magnetic field having a magnetic field gradient.

In some instances, a magnetic separation device is configured to produce a magnetic field sufficient to separate the magnetically labeled moieties in the sample. The ability of the magnetic field to separate the magnetically labeled moieties in the sample may depend on various parameters, such as the magnetic field strength, the magnetic field gradient, the type of magnetic label, the size of the magnetic label, the distance between the magnetically labeled moieties and the magnetic field source, etc. In certain instances, the force the magnetic field is able to exert on a magnetic label is proportional to the magnetic field strength and the magnetic field gradient. In some cases, the magnetic field source is configured to produce a magnetic field having a magnetic force sufficient to separate magnetically labeled moieties form non-magnetically labeled moieties in the sample. For example, the magnetic field source may be configured to produce a magnetic field having a magnetic field gradient such that the product of the magnetic field and the magnetic field gradient is sufficient to separate magnetically labeled moieties from non-magnetically labeled moieties in the sample.

The magnetic field source may be of any shape that may facilitate the separation of the magnetically labeled moieties from the non-magnetically labeled moieties in the sample. For example, the magnetic field source may be elongated, such that the magnetic field source has a length that is greater than the transverse width of the magnetic field source.

In certain embodiments, a magnetic separation device may be configured to direct a flow of the sample through the magnetic separation device such that the sample flow is proximal to the magnetic field source. Minimizing the distance between the magnetic field source and the sample, and thereby minimizing the distance between the magnetic field source and the magnetically labeled moieties in the sample may facilitate the retention of the magnetically labeled moieties in the magnetic separation device. In some cases, a magnetic separation device is configured to direct the flow of the sample through the device to maximize the length of the flow path that is proximal to the magnetic field source. For example, the device may be configured to direct the flow of the sample through a magnetic separation device such that the sample flow is substantially parallel to the longitudinal axis of the magnetic field source.

In certain embodiments, a magnetic separation device includes one magnetic field source. In some cases, the magnetic field source is configured to produce a magnetic field sufficient to separate magnetically labeled moieties form non-magnetically labeled moieties in the sample. For example, the magnetic field source may be configured to produce a magnetic field sufficient to retain the magnetically labeled moieties in the device. In embodiments that include one magnetic field source, a magnetic separation device may be configured to direct the flow of the sample through the device such that the sample flows through an area near the magnetic field source. In some cases, a magnetic separation device is configured to direct the flow of the sample through the device such that the sample flow is substantially parallel to a longitudinal axis of the magnetic field source. A magnetic separation device may also be configured to direct the flow of the sample through an area near the magnetic field source, where the magnetic field and magnetic field gradient produced by the magnetic field source may be strongest.

In other embodiments, a magnetic separation device includes two magnetic field sources, although a magnetic separation device may include any number of magnetic field sources, such as 2, 3, 4, 5, 6, 7, 8, 9, 10, 15, 20, 25, 30, 35, 40, 45, or 50 or more magnetic field sources as desired. For instance, a magnetic separation device may include a first magnetic field source and a second magnetic field source. In some cases, the first magnetic field source and the second magnetic field source are configured to produce an inhomogeneous magnetic field (e.g., a magnetic field having a magnetic field gradient) sufficient to separate magnetically labeled moieties form non-magnetically labeled moieties in the sample. The first magnetic field source and the second magnetic field source may be configured to produce a magnetic field sufficient to retain the magnetically labeled moieties in the device. In certain embodiments, the first and second magnetic field sources are arranged such that a magnetic field is produced in an area between the magnetic field sources. As such, the first and second magnetic field sources may be configured to produce a magnetic field sufficient to retain the magnetically labeled moieties in an area between the magnetic field sources.

In certain embodiments, the first magnetic field source has a surface that faces the second magnetic field source, and the second magnetic field source has a surface that faces the first magnetic field source, such that these two surfaces are opposing each other. The surface of the first magnetic field source that faces the second magnetic field source may be substantially planar. Similarly, the surface of the second magnetic field source that faces the first magnetic field source may be substantially planar. In some instances, the surfaces of the first magnetic field source and the second magnetic field source that face each other are substantially parallel to each other. In these instances, the opposing surfaces of the first and second magnetic field sources may be a substantially uniform distance from each other. In other embodiments, the opposing surfaces of the first and second magnetic field sources are not parallel to each other, such that one end of the first magnetic field source is closer to the second magnetic field source than the opposite end of the first magnetic field source. In some cases, the first magnetic field source and the second magnetic field source are both elongated. The longitudinal axis of the first magnetic field source may be substantially parallel to the longitudinal axis of the second magnetic field source.

In embodiments that include a first magnetic field source and a second magnetic field source, the magnetization vectors of the first magnetic field source and the second magnetic field source may be aligned in substantially the same direction. In some instances, having a first magnetic field source and a second magnetic field source with magnetization vectors aligned in substantially the same direction facilitates the formation of a magnetic field and a magnetic field gradient in an area between the first and second magnetic field sources. In certain embodiments, the magnetization vector of the first magnetic field source is substantially perpendicular to the surface that faces the second magnetic field source. In some cases, the magnetization vector of the second magnetic field source is substantially perpendicular to the surface that faces the first magnetic field source. In certain instances, the magnetization vectors of the first and second magnetic field sources are both substantially perpendicular to the surfaces of the first and second magnetic field sources that face each other and are aligned in substantially the same direction.

In embodiments that include first and second magnetic field sources, the device may be configured to direct the flow of the sample through the device such that the sample flows through an area between the first magnetic field source and the second magnetic field source. In some cases, as described above, the first and the second magnetic field sources are aligned such that their longitudinal axes are substantially parallel. In these cases, the device may be configured to direct the flow of the sample through the device such that the sample flow is substantially parallel to the longitudinal axes of the first and second magnetic field sources. The device may also be configured to direct the flow of the sample through an area between the first and second magnetic field sources, where the magnetic field and magnetic field gradient produced by the first and second magnetic field sources may be strongest.

The magnetic field source may include a permanent magnet, an electromagnet, a superconducting magnet, combinations thereof, and the like. In certain embodiments, the magnetic field source includes one or more permanent magnets. A "permanent magnet" is a magnetic material that has a persistent magnetic field such that the magnetic field does not substantially decrease over time. In contrast, the term "soft magnet" refers to a material that can be magnetized in the presence of an applied external magnetic field, but whose magnetism substantially decreases when the external magnetic field is removed. In embodiments where the magnetic field source includes one or more permanent magnets, the use of permanent magnets may facilitate the production of a magnetic field without the need for external energy input into the device to power the magnetic field source. In some cases, a permanent magnet costs less than an electromagnet or a superconducting magnet that produces a magnetic field with a substantially similar magnetic field strength and magnetic field gradient. In these cases, the use of a permanent magnet may reduce the cost of the magnetic field source, and thus reduce the overall cost of the magnetic separation device. In certain cases, when the magnetic field source includes one or more permanent magnets, the use of a permanent magnet may facilitate the production of a magnetic separation device that is less complex than a magnetic separation device that includes an electromagnet and/or a superconducting magnet. For example, embodiments of the device that include a permanent magnet may not need to include components associated with an electromagnet and/or a superconducting magnet, such as a power source, electrical circuits associated with the magnetic field source, cooling components associated with the electromagnet and/or superconducting magnet, temperature sensors, and the like. In certain embodiments, the subject magnetic separation device does not include an electromagnet or superconducting magnet.

In some instances, the magnetic field source includes two or more permanent magnets. The permanent magnets may be of any desirable shape, and in some instances may be cube or bar-shaped permanent magnets. In certain embodiments, the permanent magnet is a cube or bar-shaped magnet having a substantially flat face positioned proximal to the conduit of the magnetic separation device. By having "a substantially flat face" is meant that the permanent magnet does not wrap (wholly or partially) around the conduit of the magnetic separation device. As such, in these embodiments, the magnet is a bar-shaped or cube-shaped permanent magnet having one of the flat edge faces of the magnet which is positioned adjacent to the conduit.

In certain cases, the magnetic field source may have a length ranging from 1 cm to 100 cm, such as from 1 cm to 75 cm, including from 1 cm to 50 cm, or from 1 cm to 25 cm, or from 1 cm to 10 cm, or from 5 cm to 10 cm, for example from 5 cm to 6 cm; a width ranging from 0.1 cm to 100 cm, such as from 0.1 cm to 75 cm, including from 0.1 cm to 50 cm, or from 0.1 cm to 25 cm, or form 0.1 cm to 10 cm, or from 0.1 cm to 5 cm, or from 0.1 cm to 2 cm, or from 0.5 cm to 2 cm, for example from 1 cm to 1.5 cm; and a height ranging from 0.1 cm to 100 cm, such as from 0.1 cm to 75 cm, including from 0.1 cm to 50 cm, or from 0.1 cm to 25 cm, or from 0.1 cm to 10 cm, or from 0.1 cm to 5 cm, or from 0.1 cm to 2 cm, or from 0.5 cm to 2 cm, for example from 1 cm to 1.5 cm. In certain embodiments, the length of the magnetic field source ranges from 3 cm to 5 cm.

The magnetic field source may be a permanent magnet, such as a rare-earth magnet. Rare-earth magnets include, but are not limited to, samarium-cobalt magnets (e.g., SmCo₅), neodymium alloy (NdFeB) magnets (e.g., Nd₂Fe₁₄B), and the like.

In certain embodiments, the magnetic field source produces a magnetic field ranging from 0.01 T to 10 T, or from 0.01 T to 5 T, or from 0.01 T to 2 T, or from 0.1 T to 2 T, or from 0.1 T to 1.5 T, including from 0.1 T to 1 T. In some cases, the magnetic field source is configured to produce a magnetic field with a magnetic field gradient (e.g., an absolute field gradient) ranging from 0.1 T/mm to 10 T/mm, such as from 0.1 T/mm to 7 T/mm, or from 0.1 T/mm to 5 T/mm, or from 0.1 T/mm to 3 T/mm, such as from 0.1 T/mm to 2 T/mm, including from 0.1 T/mm to 1 T/mm. In certain instances, the magnetic field source produces a magnetic field having a magnetic field gradient such that the product of the magnetic field and the magnetic field gradient (e.g., absolute field gradient) ranges from 0.001 T²/mm to 100 T²/mm, such as from 0.01 T²/mm to 75 T²/mm, including from 0.1 T²/mm to 50 T²/mm, or from 0.1 T²/mm to 25 T²/mm, or from 0.1 T²/mm to 10 T²/mm, or from 0.1 T²/mm to 5 T²/mm, or from 0.1 T²/mm to 3 T²/mm, such as from 0.1 T²/mm to 2 T²/mm, including from 0.1 T²/mm to 1 T²/mm.

The subject magnetic separation device may also include one or more magnetic field guides. The magnetic field guide may be configured to direct the magnetic field from the magnetic field source to the sample flow path. In certain instances, the magnetic field guide is configured to focus the magnetic field produced by the magnetic field source. The magnetic field guide may focus the magnetic field by increasing the magnetic flux of the magnetic field source, where the magnetic flux is the amount of magnetic field (e.g., the magnetic field density) that passes through a given surface area. The magnetic flux may depend on the magnetic field strength, the area of the surface and the angle between the magnetic field and the surface. For example, the magnetic field guide may focus the magnetic field, and thus increase the magnetic flux, by directing the magnetic field through a smaller area. In some cases, directing the magnetic field through a smaller area increases the magnetic field density, thus resulting in an increase in the magnetic flux. The magnetic field guides are configured to increase magnetic field density, in certain embodiments, by 5% or more as compared to the magnetic field density in the absence of the magnetic field guides, such as 10% or more, such as 25% or more, such as 50% or more, such as 75% or more, such as 90% or more and including 95% or more as compared to the magnetic field density in the absence of the magnetic field guides. For example, in these instances the magnetic field guides may be configured to increase the magnetic field density from 5% to 95%, such as from 10% to 90%, such as 15% to 85%, such as 20% to 80% and including from 25% to 75%. In other embodiments, the magnetic field guides are configured to increase magnetic field density by 2-fold or greater as compared to the magnetic field density in the absence of the magnetic field guides, such as 3-fold or greater, such as 4-fold or greater, such as 5-fold or greater and including 10-fold or greater as compared to the magnetic field density in the absence of the magnetic field guides. For example, in these instances the magnetic field guides may be configured to increase the magnetic field density from 2-fold to 10-fold, such as from 3-fold to 9-fold, such as from 4-fold to 8-fold and including from 5-fold to 7-fold.

The magnetic field source and the magnetic field guide may be configured to produce a magnetic flux sufficient to separate magnetically labeled moieties from non-magnetically labeled moieties in a sample. In some instances, the magnetic field guide is configured to produce a magnetic field having a magnetic flux density ranging from 0.01 T to 10 T, or from 0.01 T to 5 T, or from 0.01 T to 2 T, such as from 0.1 T to 2 T, including from 0.5 T to 1.5 T.

In certain cases, the magnetic field guide is configured to direct the magnetic field from the magnetic field source to the sample flow path with minimal loss in magnetic flux. In some cases, the magnetic field guide is configured to direct the magnetic field from the magnetic field source to the sample flow path with substantially no loss in magnetic flux. Without any intent to be bound by theory, the magnetic field guide may be configured to minimize the decrease in magnetic flux due to the self-demagnetization fields present in a soft magnet near the surfaces of the soft magnet. For example, the magnetic field guide may be configured to direct the magnetic field from the magnetic field source to the sample flow path with a decrease in magnetic flux of 50% or less from the initial magnetic flux, such as 40% or less, including 30% or less, or 25% or less, or 20% or less, or 15% or less, or 10% or less, or 7% or less, or 5% or less, for example 3% or less, or 2% or less, or 1% or less from the initial magnetic flux.

In certain embodiments, the magnetic field guide is configured to focus the magnetic field by having a portion with a tapered shape and by directing the magnetic field from the magnetic field source through the tapered portion of the magnetic field guide. By "tapered" is meant that a portion of the magnetic field guide has a wider end with a larger cross-sectional area and the cross-sectional area of the portion of the magnetic field guide becomes progressively smaller towards a narrower opposing end of the magnetic field guide. For example, the magnetic field guide may have a wedge-shaped portion, where the base of the wedge-shaped portion has an area. Cross-sections of the wedge-shaped portion taken parallel to the base of the wedge-shaped portion will have progressively smaller areas towards the end of the wedge-shaped portion opposite from the base (i.e., towards the apex edge of the wedge-shaped portion).

In some instances, the magnetic field guide has a wedge-shaped portion and is configured to direct the magnetic field from the base of the wedge-shaped portion to the apex edge of the wedge-shaped portion. Directing the magnetic field from the base of the wedge-shaped portion to the apex edge of the wedge-shaped portion may facilitate an increase in the magnetic flux of the magnetic field from the magnetic field source, as described above. An increase in the magnetic flux at the apex edge of the wedge-shaped portion of the magnetic field guide may produce a higher magnetic field and a higher magnetic field gradient proximal to the apex edge of the magnetic field guide than would be present in the absence of the magnetic field guide. Other tapered shapes for the magnetic field guide are possible, such as, but not limited to, pyramid, cone, frustum, combinations thereof, and the like.

In some instances, the magnetic field guide includes a portion that tapers to a point or an edge (e.g., the apex edge). For example, a cross-sectional profile of the magnetic field guide may taper to a point at the apex edge of the magnetic field guide. In other embodiments, the cross-sectional profile of the magnetic field guide tapers to a rounded edge such that the apex edge has a rounded (e.g., arcuate) cross-sectional profile at the apex edge. The term "wedge-shaped" as used herein is meant to include embodiments of the magnetic field guide that have an apex edge with a cross-sectional profile that tapers to a point at the apex edge. The term "wedge-shaped" also includes embodiments of the magnetic field guide that have an apex edge with a cross-sectional profile that does not taper to a point at the apex edge. For example, the apex edge of the magnetic field guide may have a cross-sectional profile that is rounded, truncated, blunted, and the like. The apex edge of the magnetic field guide may have a width that is approximately the same as the width (or diameter) of a conduit positioned adjacent the apex edge of the magnetic field guide. In certain embodiments, the apex edge of the magnetic field guide has a width that is less than the width (or diameter) of the conduit. In some cases, the width of the apex edge of the magnetic field guide is 5 mm or less, such as 4 mm or less, or 3 mm or less, or 2 mm or less, or 1 mm or less, or 0.5 mm or less, or 0.1 mm or less.

In certain instances, the apex edge of a wedge-shaped portion of the magnetic field guide has an apex angle, where the apex angle is the angle between the two faces of magnetic field guide that meet at the apex edge. In some cases, the apex angle is 150 degrees or less, or 135 degrees or less, such as 120 degrees or less, or 105 degrees or less, including 90 degrees or less, or 75 degrees or less, or 60 degrees or less, or 45 degrees or less, for example 30 degrees or less. In some embodiments, the apex angle is 60 degrees.

In certain embodiments, the apex edge of the magnetic field guide may be substantially parallel to a longitudinal axis of the magnetic field guide. In addition, the apex edge of the magnetic field guide may be substantially parallel to a longitudinal axis of the magnetic field source. In embodiments with one magnetic field source, the magnetic field source may have one or more magnetic field guides associated with the magnetic field source. For example, the magnetic field source may have a first magnetic field guide and a second magnetic field guide associated with the magnetic field source. In some embodiments, the device includes a first magnetic field guide disposed on a first surface of the magnetic field source, and a second magnetic field guide disposed on a second surface of the same magnetic field source. In some instances, the first and second magnetic field guides are disposed on opposite surfaces of the magnetic field source. In certain embodiments, the first magnetic field guide is wedge-shaped with a first apex edge, the second magnetic field guide is wedge-shaped with a second apex edge, and the first apex edge is aligned substantially across from and parallel to the second apex edge. The first apex edge may be positioned at a substantially uniform distance along its length from the second apex edge. In some cases, the magnetic field source includes a permanent magnet, as described above, and the first and second surfaces of the magnetic field source are the north and south poles of the magnetic field source.

In embodiments with more than one magnetic field source, each magnetic field source may have a magnetic field guide associated with it. Each magnetic field guide may be positioned such that the longitudinal axis of the magnetic field guide is substantially parallel to the longitudinal axis of the magnetic field source to which it is associated.

In certain embodiments, the apex edge of the magnetic field guide has a linear profile. By "linear" is meant that the apex edge of the magnetic field guide is substantially straight. In some instances, the apex edge of the magnetic field guide has a non-linear profile, such as, but not limited to, a saw-tooth, sinusoidal, square wave, triangular wave profile, combinations thereof, and the like. A magnetic field guide that has an apex edge with a non-linear profile may facilitate a local increase in the magnetic field and/or the magnetic field gradient near the non-linear portions of the apex edge.

The magnetic field guide may be proximal to the magnetic field source. In certain cases, the magnetic field guide is contacted with the magnetic field source. For example, the magnetic field guide may be attached to the magnetic field source to facilitate contact between the magnetic field guide and the magnetic field source. As described above, a magnetic separation device may include one magnetic field source. In these embodiments, the magnetic field source may include a wedge-shaped portion as described above. The magnetic field source may also include an extended portion between the wedge-shaped portion and the magnetic field source. The extended portion of the magnetic field guide may be configured to position the wedge-shaped portion at a distance away from the surface of the magnetic field source. For example, the extended portion of the magnetic field guide may contact the magnetic field source on a part of a first surface of the extended portion of the magnetic field guide. The extended portion of the magnetic field guide may extend a distance above the top surface of the magnetic field source. The part of the first surface of the extended portion of the magnetic field guide that extends above the top surface of the magnetic field source may have the wedge-shaped portion of the magnetic field guide. In some embodiments, the extended portion and the wedge-shaped portion of the magnetic field guide are contiguous (e.g., formed from the same piece of material). In other cases, the extended portion and the wedge-shaped portion of the magnetic field guide are separate pieces that are attached to each other. As described above, the device may also include a second magnetic field guide disposed on a surface of the magnetic field source opposite from the first magnetic field guide. Similar to the first magnetic field guide described above, the second magnetic field guide may include an extended portion and a wedge-shaped portion. The first and second magnetic field guides may be configured such that the apex edge of the wedge-shaped portion of the first magnetic field guide is proximal to the apex edge of the wedge-shaped portion of the second magnetic field guide. In some cases, the apex edge of the first magnetic field guide is substantially parallel to the apex edge of the second magnetic field guide. The apex edge of the first magnetic field guide may be aligned across from the apex edge of the second magnetic field guide. For example, the apex edge of the first magnetic field guide may be aligned substantially directly across from the apex edge of the second magnetic field guide. In certain embodiments, the apex edge of the first magnetic field guide is aligned substantially across from and substantially parallel to the apex edge of the second magnetic field guide. During use, the distance between the apex edge of the first magnetic field guide and the apex edge of the second magnetic field guide may be 5 cm or less, such as 2 cm or less, including 1 cm or less, or 7 mm or less, or 5 mm or less, or 3 mm or less, or 2 mm or less, or 1 mm or less.

In other embodiments as described above, a magnetic separation device may include two magnetic field sources, such as first and second magnetic field sources arranged proximal to each other. In some instances, a first magnetic field guide is associated with the first magnetic field source, and a second magnetic field guide is associated with the second magnetic field source. The first magnetic field guide may be positioned on the first magnetic field source on the surface of the first magnetic field source proximal to the second magnetic field source. For example, in embodiments where the magnetic field guides are wedge-shaped, the first magnetic field guide may be disposed on the first magnetic field source such that the base of the first magnetic field guide contacts the surface of the first magnetic source proximal to the second magnetic source. Similarly, the second magnetic field guide may be positioned on the second magnetic field source on the surface of the second magnetic field source proximal to the first magnetic field source. For example, in embodiments where the magnetic field guides are wedge-shaped, the second magnetic field guide may be disposed on the second magnetic field source such that the base of the second magnetic field guide contacts the surface of the second magnetic source proximal to the first magnetic source. In this arrangement, the first and second magnetic field guides may be positioned between the first and second magnetic field sources. In addition, the apex edge of the first magnetic field guide may be proximal to the apex edge of the second magnetic field guide. In some cases, the apex edge of the first magnetic field guide is substantially parallel to the apex edge of the second magnetic field guide. The apex edge of the first magnetic field guide may be aligned across from the apex edge of the second magnetic field guide. For example, the apex edge of the first magnetic field guide may be aligned substantially directly across from the apex edge of the second magnetic field guide. In certain embodiments, the apex edge of the first magnetic field guide is aligned substantially across from and substantially parallel to the apex edge of the second magnetic field guide. During use, the distance between the apex edge of the first magnetic field guide and the apex edge of the second magnetic field guide may be 5 cm or less, such as 2 cm or less, including 1 cm or less, or 7 mm or less, or 5 mm or less, or 3 mm or less, or 2 mm or less, or 1 mm or less.

As described above, the first and second magnetic field guides may be configured to focus the magnetic field produced by the magnetic field source. In certain instances, the first and second magnetic field guides focus the magnetic field to a region proximal to the apex edges of the first and second magnetic field guides. For example, the first and second magnetic field guides may focus the magnetic field in an area between the apex edges of the magnetic field guides. The first and second magnetic field guides may be configured to produce a magnetic flux proximal to the apex edges of the magnetic field guides sufficient to separate magnetically labeled moieties from non-magnetically labeled moieties in a sample. In some instances, the first and second magnetic field guides are configured to produce a magnetic field proximal to the apex edges of the magnetic field guides having a magnetic flux density ranging from 0.01 T to 10 T, or from 0.01 T to 5 T, or from 0.01 T to 2 T, such as from 0.1 T to 2 T, including from 0.5 T to 1.5 T.

In certain embodiments, the magnetic field guide includes a soft magnet. The term "soft magnet" refers to a material that can be magnetized in the presence of an applied external magnetic field, but whose magnetism substantially decreases when the external magnetic field is removed. Soft magnets may include, but are not limited to, ferromagnetic materials, such as iron (e.g., annealed iron), stainless steel and nickel, ferromagnetic materials, such as ceramic oxides of metals, combinations thereof, and the like.

In some instances, the magnetic field guide may have a length ranging from 1 cm to 100 cm, such as from 1 cm to 75 cm, including from 1 cm to 50 cm, or from 1 cm to 25 cm, or from 1 cm to 10 cm, or from 5 cm to 10 cm, for example from 5 cm to 6 cm; a width ranging from 0.1 cm to 100 cm, such as from 0.1 cm to 75 cm, including from 0.1 cm to 50 cm, or from 0.1 cm to 25 cm, or form 0.1 cm to 10 cm, or from 0.1 cm to 5 cm, or from 0.1 cm to 2 cm, or from 0.5 cm to 2 cm, for example from 1 cm to 1.5 cm; and a height ranging from _0.1 cm to 100 cm, such as from 0.1 cm to 75 cm, including from 0.1 cm to 50 cm, or from 0.1 cm to 25 cm, or from 0.1 cm to 10 cm, or from 0.1 cm to 5 cm, or from 0.1 cm to 2 cm, or from 0.5 cm to 2 cm, for example from 1 cm to 1.5 cm.

In certain embodiments, a magnetic separation device includes one or more magnetic flux sinks. The magnetic flux sink may be disposed on a surface of the magnetic field source. In some instances, the magnetic flux sink is disposed on a surface of the magnetic field source opposite the surface of the magnetic field source in contact with the magnetic field guide. In certain cases, the magnetic flux sink is configured to increase the magnetic field of the magnetic field source. The magnetic flux sink may be configured to increase the magnetic field of the magnetic field source by decreasing the self-demagnetization field of the magnetic field source (e.g., the self-demagnetization field of the permanent magnet). In some cases, the magnetic flux sink includes a soft magnet.

### Feedback Monitor

The system of the invention further includes a feedback monitor configured to assess aggregation of the biological sample during the subject methods. Feedback monitors of interest are configured to measure both the quality of the processed biological sample (e.g., the ratio of collected cells to cell aggregates) as well as the quantity of cells collected. For example, in some instances, feedback monitors are configured to measure the entrainment factor exhibited by the processed biological sample. In other instances, feedback monitors are configured to measure the concentration of cell aggregates present in the processed biological sample. In yet other instances, feedback monitors are configured to measure the number of individual cells collected from the processed biological sample.

In some embodiments, feedback monitors collect real-time data about the processed biological sample. In other embodiments, feedback monitors are configured to assess aggregation in the processed biological sample at regular intervals, such as every 1 minute, every 5 minutes, every 10 minutes, every 30 minutes, every 60 minutes or some other interval. In yet other embodiments, feedback monitors are configured to assess aggregation in the processed biological sample after every processing interval, after every 2 processing intervals, after every 3 processing intervals or after some other number of intervals.

Feedback monitors of interest may include any suitable device which is configured to measure the aggregation of particles in a fluidic sample and may include but is not limited to optical scatter sensors, laser scatter sensors, laser diffraction sensors, optical absorption sensors as well as emission sensors. Systems may include one or more feedback monitors, as desired, such two or more, such as three or more, such as four or more and including five or more feedback monitors.

Feedback monitors may be positioned at any place on the subject systems which is suitable for assessing aggregation in the processed sample. In some embodiments, a feedback monitor is positioned adjacent to an outlet of the acoustic concentrator device to assess aggregation in the processed biological sample after acoustically separating larger components from the smaller components in the disrupted biological sample.

In embodiments of the present disclosure, feedback monitors may also be configured to evaluate aggregation in the biological sample and identify any desired adjustments for processing the biological sample, where the adjustments may in certain instances improve the quality of the processed biological sample or increase the quantity of collected cells. In some embodiments, feedback monitors assess aggregation in the processed biological sample and provides data to a user about aggregation in the processed biological sample. For example, in certain instances feedback monitors provide data about entrainment exhibited by the processed biological sample.

In certain embodiments, the feedback monitor includes a processor which is configured to evaluate the assessed aggregation in the processed biological sample and to identify if any desired adjustments for processing the biological sample are needed. In some embodiments, feedback monitors are configured to evaluate the assessed aggregation and determine if one or more additional processing intervals is required. In these embodiments, the assessed aggregation may be evaluated to determine, for example, if a predetermined goal has been reached, such as achieving a particular concentration of cell aggregates in the processed biological sample or a specific amount of collected cells. In other embodiments, the feedback monitor is configured to evaluate the assessed aggregation and determine if one or more of disrupting the biological sample or acoustic separation requires adjustment.

In certain aspects, feedback monitors are configured to allow the subject systems to operate in a closed-loop fashion. For example, in some embodiments the feedback monitor may assess one or more parameters of sample disruption, acoustic separation, magnetic separation, cell aggregate concentration, tissue fragment concentration, sample entrainment value, and the like. The system may change one or more parameters of the subject fluidic sorting devices on a substantially real-time basis to automatically obtain more efficient results or to optimize the processing rates depending on user requirements. For example, the system may alter one or more of disrupter power, disrupter temperature, the flow rate of a magnetic separation device, the flow rate of an acoustic separation device, the frequency of the acoustic field generator of an acoustic concentration device, the power applied to the acoustic field generator, etc. In certain aspects, such a closed-loop system may involve applying one or more statistical or learning machine algorithms, such as genetic algorithms, neural networks, hidden Markov models, Bayesian networks, and the like.

In certain embodiments, systems are coupled to one or more analytical devices for analyzing the collected cells. In some instances, the analytical device is a cell sorter or flow cytometer for sorting or analyzing the collected cells. Suitable cell sorters and flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1): 17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, the coupled analytical device is a BD Biosciences FACSCanto™ flow cytometer, a BD Biosciences Influx™ cell sorter, or the like.

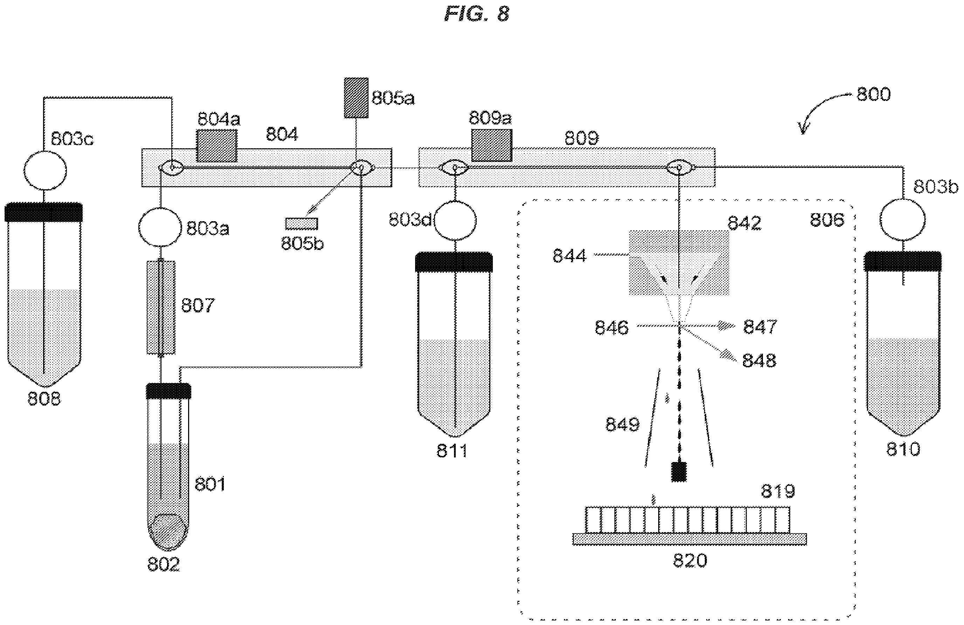

FIG. 8 illustrates a schematic of a system for processing a biological sample coupled to a fluorescence activated cell sorter for analyzing and sorting the collected cells according to certain embodiments of the present disclosure. System 800 includes sample disrupter 802 for disrupting a biological sample 801. The disrupted biological sample is flowed using pump 803a through magnetic separator device 807 positioned between and in fluidic communication with sample disrupter 802 and first acoustic concentrator device 804 having piezoelectric transducer 804a to separate larger components of the disrupted biological sample from smaller components to produce processed biological sample. Processed biological sample is assessed with a feedback monitor having laser light source 805a and laser scatter detector 805b to determine the extent of aggregation in the processed biological sample. Processed biological sample is subsequently directed through one or more outlets from acoustic concentrator device 804 where the larger components which require further processing (e.g., tissue, tissue fragments, cell aggregates, etc.) are fed back into sample disrupter 802, while the smaller components (e.g., cells, cell debris and non-cellular macromolecules) are conveyed to second acoustic concentrator 809 having a second piezoelectric transducer 809a to separate cells from cellular debris and non-cellular macromolecules. Cells separated from the cellular debris and non-cellular macromolecules are conveyed to fluorescence activated cell sorter (FACS) system 806 while cellular debris and non-cellular macromolecules is conveyed using pump 803b to waste container 810. FACS system 806 includes a sorter flow cell 842 and sheath reservoir 844, excitation optics 846, deflection plates 849, forward scattering detector(s) 847 and side scatter and fluorescence detector(s) 848. From FACS system 806, sorted sample (e.g., enriched and sorted cells) is collected in microwell plate 819 positioned on a mechanical stage 820. System 800 also includes disaggregation buffer 808 conveyed using pump 803c through the first acoustic concentrator device for separating larger components from smaller components in the disrupted biological sample and wash buffer 811 conveyed using pump 803d through the second acoustic concentrator device for separating cells from cellular debris and non-cellular macromolecules.

### COMPUTER-CONTROLLED SYSTEMS

Aspects of the present disclosure may further include computer controlled systems for practicing the subject methods, where the systems further include one or more computers for automation or semi-automation of a system for practicing methods described herein. In certain embodiments, systems include a computer having a computer readable storage medium with a computer program stored thereon, where the computer program when loaded on the computer includes algorithm for dirsupting one a biological sample to produce a disrupted biological sample; algorithm for acoustically separating larger components from smaller components in the disrupted biological sample; algorithm for employing magnetic separation device to separate magnetically labelled moieties from non-magnetically labelled moieties in the disrupted biological sample; algorithm for acoustically separating cells from cellular debris and non-cellular macromolecules in the processed biological sample; algorithm for monitoring one or more of the disrupted biological sample, the processed biological sample and collected cells.

In embodiments, the system includes an input module, a processing module and an output module. In some embodiments, the subject systems may include an input module such that parameters or information about each biological sample, frequency of applied acoustic wave in the acoustic concentrator device, amplitude of the applied acoustic wave in the acoustic concentrator device, activation voltage of the acoustic concentrator device, magnetic field strength, magnetic field homogeneity, flow rate through each component of the subject systems, laser scatter calibration data from the feedback monitor, etc. may be inputted into the computer. The processing module includes memory having a plurality of instructions for performing the steps of the subject methods, such as disrupting the biological sample to produce a disrupted biological sample; acoustically separating larger components from smaller components in the disrupted biological sample; magnetically separating magnetically labelled moieties from non-magnetically labeled moieties in the disrupted biological sample; acoustically separating cells from cellular debris and non-cellular macromolecules in the processed biological sample; and monitoring the processed biological sample to assess aggregation in the processed biological sample.

After the processing module has performed one or more of the steps of the subject methods, an output module communicates the results (e.g., the number of collected cells or the amount of cell aggregates remaining in the processed biological sample) to the user, such as by displaying on a monitor or by printing a report.

The subject systems may include both hardware and software components, where the hardware components may take the form of one or more platforms, e.g., in the form of servers, such that the functional elements, i.e., those elements of the system that carry out specific tasks (such as managing input and output of information, processing information, etc.) of the system may be carried out by the execution of software applications on and across the one or more computer platforms represented of the system.

Systems may include a display and operator input device. Operator input devices may, for example, be a keyboard, mouse, or the like. The processing module includes a processor which has access to a memory having instructions stored thereon for performing the steps of the subject methods, such as disrupting the biological sample to produce a disrupted biological sample; acoustically separating larger components from smaller components in the disrupted biological sample; magnetically separating magnetically labelled moieties from non-magnetically labeled moieties in the disrupted biological sample; acoustically separating cells from cellular debris and non-cellular macromolecules in the processed biological sample; and monitoring the processed biological sample to assess aggregation in the processed biological sample. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, a removable hard disk drive, or a diskette drive. Such types of memory storage devices typically read from, and/or write to, a program storage medium (not shown) such as, respectively, a compact disk, magnetic tape, removable hard disk, or floppy diskette. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid state storage devices (including magnetic or optical disks or tape or RAM, or any other suitable device, either fixed or portable). The processor may include a general purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the invention also include programming, e.g., in the form of computer program products, algorithms for use in practicing the methods as described above. Programming according to the present invention can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a a computer connected to a Wide Area Network ("WAN"), telephone network, satellite network, or any other suitable communication channel, including a mobile telephone (e.g., smartphone). In these embodiments, input manager receives information, e.g., parameters or information about each biological sample, frequency of applied acoustic wave in the acoustic concentrator device, amplitude of the applied acoustic wave in the acoustic concentrator device, activation voltage of the acoustic concentrator device, magnetic field strength, magnetic field homogeneity, flow rate through each component of the subject systems, laser scatter calibration data from the feedback monitor, etc. Input manager processes and forwards this information to the processing module. These functions are performed using any convenient technique.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g, over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a work station, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows NT®, Windows XP, Windows 7, Windows 8, iOS, Sun Solaris, Linux, OS/400, Compaq Tru64 Unix, SGI IRIX, Siemens Reliant Unix, and others.

### KITS

Also provided are examples of kits not covered by the present invention, kite- for practicing one or more embodiments of the above-described methods. The subject kits may include various components and reagents. In some instances, the kits include at least reagents finding use in the methods (e.g., as described above), such as a wash solution or buffer for washing a reusable conduit, empty syringes for delivering biological sample or wash buffer, empty syringes for retrieving collected cells, syringes preloaded with wash buffer or biological sample, one or more magnetic labels for labeling moieties in a sample such that magnetically labeled moieties may be separated from non-magnetically labeled moieties in the sample. In other instances kits include a computer readable medium having a computer program stored thereon, wherein the computer program, when loaded into a computer, operates the computer to perform a flow cytometric assay as described herein; and a physical substrate having an address from which to obtain the computer program.

In addition to the above components, the subject kits may further include instructions for practicing the methods. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, etc. Yet another means would be a computer readable medium, e.g., CD, DVD, Blu-Ray, flash memory, etc., on which the information has been recorded. Yet another means that may be present is a website address which may be used via the Internet to access the information at a removed site.

### UTILITY

The subject devices, systems, methods, and kits find use in a variety of different applications where it is desirable to sort or concentrate components (e.g., cells) in a liquid sample. The present disclosure also finds use in applications where cells prepared from a biological sample may be desired for research, laboratory testing or for use in therapy. In some embodiments, the subject methods and devices may facilitate the obtaining individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems facilitate obtaining cells from fluidic or tissue samples to be used in therapy. Methods and devices of the present disclosure allow for separating and collecting cells from a biological sample (e.g., organ, tissue, tissue fragment, fluid) at high efficiency, high flow rate and low cost.

### EXAMPLES

As can be appreciated from the disclosure provided above, the present disclosure has a wide variety of applications. Accordingly, the following examples are put forth so as to provide those of ordinary skill in the art with a complete disclosure and description of how to make and use the present invention, and are not intended to limit the scope of what the inventors regard as their invention nor are they intended to represent that the experiments below are all or the only experiments performed. Those of skill in the art will readily recognize a variety of noncritical parameters that could be changed or modified to yield essentially similar results. Thus, the following examples are put forth so as to provide those of ordinary skill in the art with a complete disclosure and description of how to make and use the present invention, and are not intended to limit the scope of the invention nor are they intended to represent that the experiments below are all or the only experiments performed. Efforts have been made to ensure accuracy with respect to numbers used (e.g. amounts, temperature, etc.) but some experimental errors and deviations should be accounted for.

### EXAMPLE 1

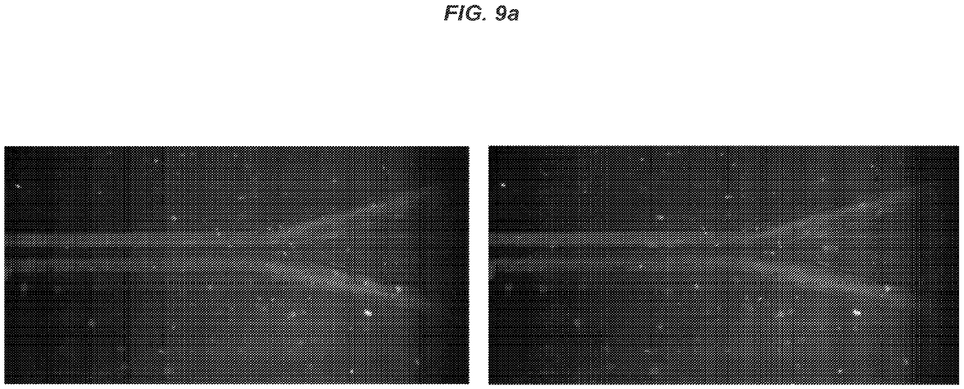

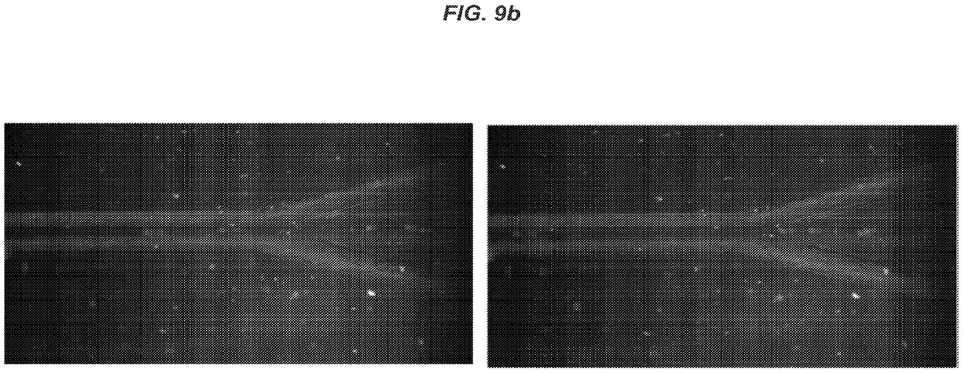

FIGs. 9a-b shows images of separating particles of different sizes in an acoustic concentrator device at low flow rates (e.g., 4 µL/minute). In FIG. 9a, when the piezoelectric transducer is not activated and no acoustic radiation force is exerted on the flowing sample, inertial forces cause only a few large particles (diameter about 50 µm) to move to the center stream within the channel of the acoustic concentrator device. In contrast, in FIG. 9b, when the piezoelectric transducer is operated at a power level of about 200 mV, the applied acoustic standing wave exerts radiation pressure to focus larger components (e.g., particles having diameters of about 50 µm) to the center stream while smaller particles (diameters less than 50 µm) remain in the laminating flow along the sides of the acoustic concentrator device channel.

### EXAMPLE 2

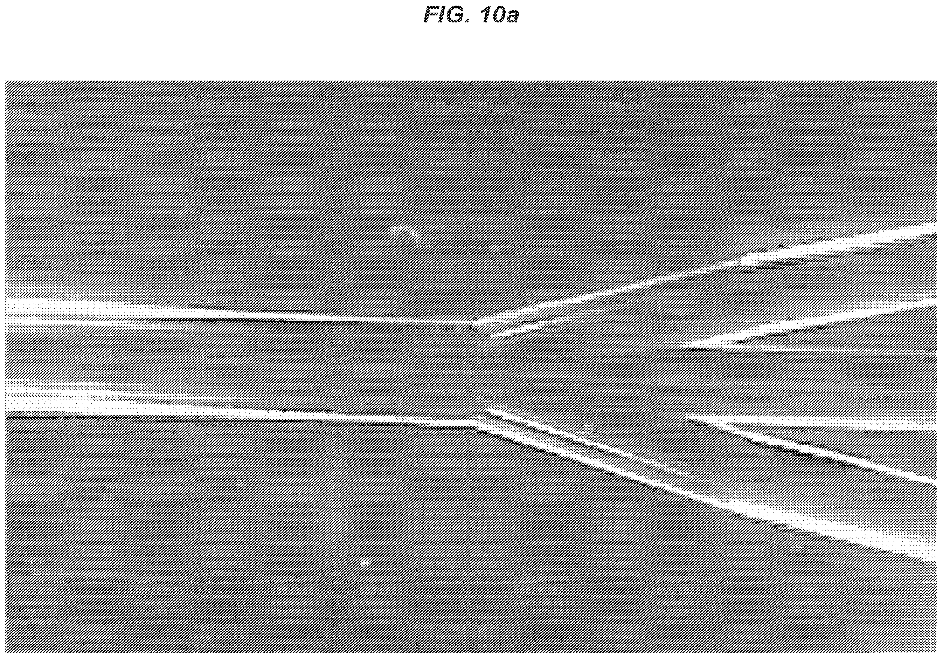

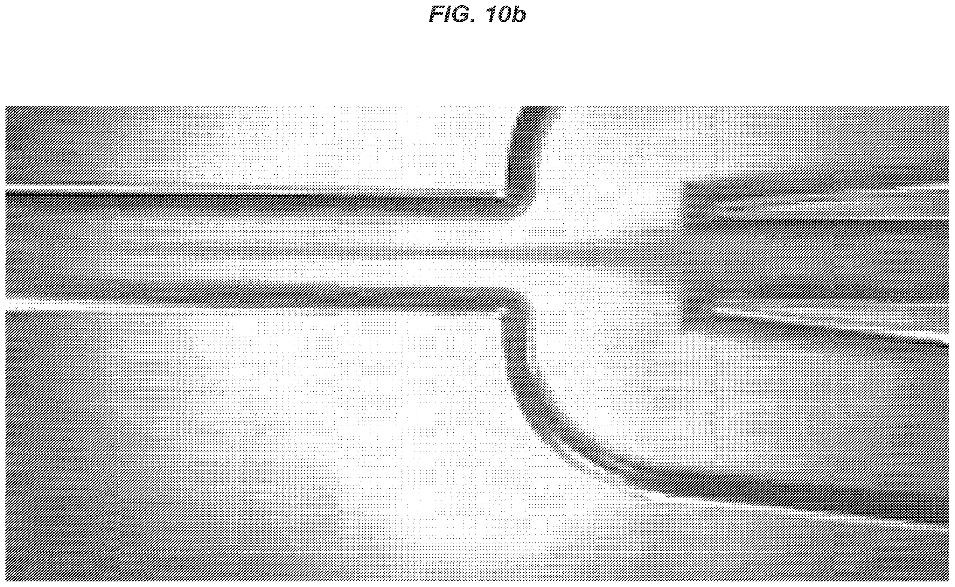

FIGs. 10a-b shows that degree of hydrodynamic focusing in the acoustic concentrator device can be regulated by the ratio of liquid being diverted to side streams vs. that exiting the center stream. By doing this, this ratio can be adjusted to optimized light scatter measured by the feedback monitor positioned near the outlet of the acoustic concentrator device channel. FIG. 10a illustrates cells remaining tightly focused into the collection region at the center of the channel. FIG. 10b, on the other hand, illustrates that cells arriving at the center outlet are significantly diffused. In some instances, a minimum flow of fluid exiting out of the center channel of the acoustic concentrator device may be necessary for the stream to remain hydrodynamically focused after exiting the space affected by the acoustic radiation pressure of the applied standing wave. Here, the ratio of flow exiting the side outlets as compared to that exiting the center outlet does not exceed 5:1.

Although the foregoing invention has been described in some detail by way of illustration and example for purposes of clarity of understanding, it is readily apparent to those of ordinary skill in the art in light of the teachings of this disclosure that certain changes and modifications may be made thereto without departing from the scope of the appended claims.

Accordingly, the preceding merely illustrates the principles of the invention. It will be appreciated that those skilled in the art will be able to devise various arrangements which, although not explicitly described or shown herein, embody the principles of the invention and are included within its scope. Furthermore, all examples and conditional language recited herein are principally intended to aid the reader in understanding the principles of the invention being without limitation to such specifically recited examples and conditions. The scope of the present invention, therefore, is not intended to be limited to the exemplary embodiments shown and described herein. Rather, the scope of present invention is embodied by the appended claims.

## Claims

1. A method of processing a biological sample, the method comprising:
disrupting a biological sample in a sample disrupter to produce a first disrupted biological sample; and
acoustically separating larger components from smaller components in the first disrupted biological sample in an acoustic separator
comprising an inlet and an outlet that are in fluid communication with the sample disrupter; **characterized in that** the method further comprises
assessing, by feedback monitoring, the degree of disruption of the acoustically separated larger components and smaller components with a detector at the outlet of the acoustic separator that is configured to convey the acoustically separated larger components back to the sample disrupter in response to the feedback monitoring.

2. The method according to claim 1, wherein disrupting the biological sample comprises disaggregating components of the biological sample.

3. The method according to any of the preceding claims, wherein disrupting the biological sample comprises mechanically agitating the biological sample or ultrasonically agitating the biological samples or enzymatically disaggregating larger components in the biological sample or grinding tissue in the biological sample.

4. The method according to any of the preceding claims, wherein acoustically separating larger components from smaller components in the disrupted biological sample comprises applying an acoustic wave to the disrupted biological sample.

5. The method according to claim 4, wherein the acoustic wave has a frequency of 2 MHz or greater.

6. The method according to claims 4 or 5, wherein acoustically separating the larger components from the smaller components comprises concentrating the larger components in the disrupted biological sample at a node of the applied acoustic wave.

7. The method according to any of the preceding claims, wherein the method further comprises collecting the larger components of the acoustically separated biological sample through a first sample outlet and collecting the smaller components of the acoustically separated biological sample through a second sample outlet.

8. The method according to any of the preceding claims, wherein the method further comprises contacting the disrupted biological sample with a magnetic label.

9. The method according to claim 8, wherein the method further comprises separating magnetically labeled moieties from non-magnetically labeled moieties in the biological sample.

10. The method according to any of the preceding claims, wherein the method further comprises:
disrupting the acoustically separated larger components to produce a second disrupted biological sample; and
acoustically separating larger components from smaller components in the second disrupted biological sample.

11. The method according to any of the preceding claims, wherein the method further comprises washing the acoustically separated smaller components.

12. The method according to any of the preceding claims, wherein the biological sample is selected from the group consisting of blood, plasma, serum, cerebrospinal fluid, lymph, tears, saliva, urine, semen, vaginal fluids, amniotic fluid, umbilical cord blood, mucus, synovial fluid and tissue sections and homogenate and lysates thereof.

13. The method according to any of the preceding claims, wherein the method further comprises acoustically separating larger components from smaller components in the acoustically separated smaller components.

14. The method according to any of the preceding claims, wherein the method further comprises analysis of cells collected from the acoustically separated smaller components.

15. The method according to claim 1, wherein assessing the degree of disruption comprises detecting light scatter with the detector from the acoustically separated larger components and the acoustically separated smaller components.

16. The method according to claim 1, wherein assessing the degree of disruption comprises determining the proportion of free cells and cell aggregates present in the acoustically separated larger components.

17. A system for processing a biological sample, the system comprising:
a disrupter for disrupting a biological sample; and
an acoustic concentrator comprising an inlet and an outlet fluidically coupled to the disrupter configured to acoustically separate larger components from smaller components in a disrupted biological sample; and **characterized in that** the system further comprises
a detector positioned at an outlet of the acoustic concentrator configured to assess with feedback monitoring the degree of disruption of an acoustically separated sample,
wherein the acoustic concentrator is configured to convey the acoustically separated larger components back to the disrupter through the outlet based on the feedback monitoring.

## Patentansprüche

1. Verfahren zur Verarbeitung einer biologischen Probe, wobei das Verfahren Folgendes umfasst:
Aufbrechen einer biologischen Probe in einem Probenaufbrecher, um eine erste aufgebrochene biologische Probe zu erzeugen; und
akustisches Trennen größerer Bestandteile von kleineren Bestandteilen in der ersten aufgebrochenen biologischen Probe in einem akustischen Abscheider mit einem Einlass und einem Auslass, die mit dem Probenunterbrecher in Fluidverbindung stehen;
**dadurch gekennzeichnet, dass** das Verfahren weiterhin Folgendes umfasst:
durch Rückkopplungsüberwachung Bewerten des Grades der Aufbrechung der akustisch getrennten größeren Bestandteile und kleineren Bestandteile mit einem Detektor am Auslass des akustischen Abscheiders, der so konfiguriert ist, dass er die akustisch getrennten größeren Bestandteile als Reaktion auf die Rückkopplungsüberwachung zurück in den Probenaufbrecher befördert.

2. Verfahren nach Anspruch 1, wobei das Aufbrechen der biologischen Probe das Disaggregieren von Bestandteilen der biologischen Probe umfasst.

3. Verfahren nach einem der vorhergehenden Ansprüche, wobei das Aufbrechen der biologischen Probe das mechanische Rühren der biologischen Probe oder das Ultraschallrühren der biologischen Proben oder das enzymatische Disaggregieren größerer Bestandteile in der biologischen Probe oder das Mahlen von Gewebe in der biologischen Probe umfasst.

4. Verfahren nach einem der vorhergehenden Ansprüche, wobei das akustische Trennen größerer Bestandteile von kleineren Bestandteilen in der aufgebrochenen biologischen Probe das Anlegen einer Schallwelle an die aufgebrochene biologische Probe umfasst.

5. Verfahren nach Anspruch 4, wobei die Schallwelle eine Frequenz von 2 MHz oder mehr aufweist.

6. Verfahren nach Anspruch 4 oder 5, wobei das akustische Trennen der größeren Bestandteile von den kleineren Bestandteilen das Konzentrieren der größeren Bestandteile in der aufgebrochenen biologischen Probe an einem Knoten der angelegten Schallwelle umfasst.

7. Verfahren nach einem der vorhergehenden Ansprüche, wobei das Verfahren weiterhin das Sammeln der größeren Bestandteile der akustisch getrennten biologischen Probe durch einen ersten Probenauslass und das Sammeln der kleineren Bestandteile der akustisch getrennten biologischen Probe durch einen zweiten Probenauslass umfasst.

8. Verfahren nach einem der vorhergehenden Ansprüche, wobei das Verfahren weiterhin das Inkontaktbringen der aufgebrochenen biologischen Probe mit einer magnetischen Markierung umfasst.

9. Verfahren nach Anspruch 8, wobei das Verfahren weiterhin das Trennen magnetisch markierter Einheiten von nicht magnetisch markierten Einheiten in der biologischen Probe umfasst.

10. Verfahren nach einem der vorhergehenden Ansprüche, wobei das Verfahren weiterhin Folgendes umfasst:
Aufbrechen der akustisch getrennten größeren Bestandteile, um eine zweite aufgebrochene biologische Probe zu erzeugen; und
akustisches Trennen größerer Bestandteile von kleineren Bestandteilen in der zweiten aufgebrochenen biologischen Probe.

11. Verfahren nach einem der vorhergehenden Ansprüche, wobei das Verfahren weiterhin das Waschen der akustisch getrennten kleineren Bestandteile umfasst.

12. Verfahren nach einem der vorhergehenden Ansprüche, wobei die biologische Probe ausgewählt ist aus der Gruppe bestehend aus Blut, Plasma, Serum, Zerebrospinalflüssigkeit, Lymphe, Tränen, Speichel, Urin, Sperma, Vaginalflüssigkeit, Fruchtwasser, Nabelschnurblut, Schleim, Synovialflüssigkeit und Gewebeabschnitte sowie Homogenisat und Lysate davon.

13. Verfahren nach einem der vorhergehenden Ansprüche, wobei das Verfahren weiterhin das akustische Trennen größerer Bestandteile von kleineren Bestandteilen in die akustisch getrennten kleineren Bestandteile umfasst.

14. Verfahren nach einem der vorhergehenden Ansprüche, wobei das Verfahren weiterhin das Analysieren von aus den akustisch getrennten kleineren Bestandteilen gesammelten Zellen umfasst.

15. Verfahren nach Anspruch 1, wobei das Bewerten des Grades der Aufbrechung das Erfassen einer Lichtstreuung von den akustisch getrennten größeren Bestandteilen und den akustisch getrennten kleineren Bestandteilen mit dem Detektor umfasst.

16. Verfahren nach Anspruch 1, wobei das Bewerten des Grades der Aufbrechung das Bestimmen des Anteils an freien Zellen und Zellaggregaten, die in den akustisch getrennten größeren Bestandteilen vorhanden sind, umfasst.

17. System zur Verarbeitung einer biologischen Probe, wobei das System Folgendes umfasst:
einen Aufbrecher zum Aufbrechen einer biologischen Probe; und
einen akustischen Konzentrator mit einem Einlass und einem Auslass, die fluidisch mit dem Aufbrecher gekoppelt sind, der dazu konfiguriert ist, größere Bestandteile von kleineren Bestandteilen in einer aufgebrochenen biologischen Probe akustisch zu trennen; und
**dadurch gekennzeichnet, dass** das System weiterhin Folgendes umfasst:
einen Detektor, der an einem Auslass des akustischen Konzentrators positioniert ist und dazu konfiguriert ist, mit Rückkopplungsüberwachung den Grad der Aufbrechung einer akustisch getrennten Probe zu bewerten,
wobei der akustische Konzentrator dazu konfiguriert ist, die akustisch getrennten größeren Bestandteile basierend auf der Rückkopplungsüberwachung durch den Auslass in den Aufbrecher zurück zu befördern.

## Revendications

1. Procédé de traitement d'un échantillon biologique, le procédé comprenant :
la dissociation d'un échantillon biologique dans un dissociateur d'échantillon afin de produire un premier échantillon biologique dissocié ; et
la séparation par voie acoustique des constituants de grande taille et des constituants de petite taille présents dans le premier échantillon biologique dissocié, dans un séparateur acoustique comprenant un orifice d'entrée et un orifice de sortie qui sont en communication fluidique avec le dissociateur d'échantillon ;
**caractérisé en ce que** le procédé comprend en outre :
l'évaluation, par contrôle à rétroaction, du degré de dissociation des constituants de grande taille et constituants de petite taille séparés par voie acoustique, au moyen d'un détecteur situé au niveau de l'orifice de sortie du séparateur acoustique conçu pour reconduire les constituants de grande taille séparés par voie acoustique vers le dissociateur d'échantillon en réaction au contrôle à rétroaction.

2. Procédé selon la revendication 1, dans lequel la dissociation de l'échantillon biologique comprend la désagrégation des constituants de l'échantillon biologique.

3. Procédé selon l'une quelconque des revendications précédentes, dans lequel la dissociation de l'échantillon biologique comprend l'agitation mécanique de l'échantillon biologique ou l'agitation ultrasonore des échantillons biologiques ou la désagrégation enzymatique des constituants de grande taille de l'échantillon biologique ou le broyage des tissus de l'échantillon biologique.

4. Procédé selon l'une quelconque des revendications précédentes, dans lequel la séparation par voie acoustique des constituants de grande taille et des constituants de petite taille présents dans l'échantillon biologique dissocié comprend l'application d'une onde acoustique à l'échantillon biologique dissocié.

5. Procédé selon la revendication 4, dans lequel l'onde acoustique a une fréquence de 2 MHz ou plus.

6. Procédé selon la revendication 4 ou 5, dans lequel la séparation par voie acoustique des constituants de grande taille et des constituants de petite taille comprend la concentration des constituants de grande taille, présents dans l'échantillon biologique dissocié, au niveau d'un nœud de l'onde acoustique appliquée.

7. Procédé selon l'une quelconque des revendications précédentes, comprenant en outre le recueil des constituants de grande taille de l'échantillon biologique ayant subi la séparation par voie acoustique, par un premier orifice de sortie d'échantillon et le recueil des constituants de petite taille de l'échantillon biologique ayant subi la séparation par voie acoustique, par un deuxième orifice de sortie d'échantillon.

8. Procédé selon l'une quelconque des revendications précédentes, comprenant en outre la mise en contact de l'échantillon biologique dissocié et d'un traceur magnétique.

9. Procédé selon la revendication 8, comprenant en outre la séparation des fractions porteuses de traceurs magnétiques et des fractions non porteuses de traceurs magnétiques présentes dans l'échantillon biologique.

10. Procédé selon l'une quelconque des revendications précédentes, comprenant en outre :
la dissociation des constituants de grande taille séparés par voie acoustique afin de produire un deuxième échantillon biologique dissocié, et
la séparation par voie acoustique des constituants de grande taille et des constituants de petite taille présents dans le deuxième échantillon biologique dissocié.

11. Procédé selon l'une quelconque des revendications précédentes, comprenant en outre le lavage des constituants de petite taille séparés par voie acoustique.

12. Procédé selon l'une quelconque des revendications précédentes, dans lequel l'échantillon biologique appartient à un groupe constitué par : le sang, le plasma, le sérum, le liquide céphalorachidien, la lymphe, les larmes, la salive, l'urine, le sperme, les fluides vaginaux, le liquide amniotique, le sang ombilical, le mucus, le liquide synovial et des sections tissulaires synoviaux, et le broyât et les lysats de ceux-ci.

13. Procédé selon l'une quelconque des revendications précédentes, comprenant en outre la séparation par voie acoustique de constituants de grande taille et de constituants de petite taille présents dans les constituants de petite taille séparés par voie acoustique.

14. Procédé selon l'une quelconque des revendications précédentes, comprenant en outre l'analyse des cellules recueillies à partir des constituants de petite taille séparés par voie acoustique.

15. Procédé selon la revendication 1, dans lequel l'évaluation du degré de dissociation comprend la détection de la diffraction de la lumière au moyen du détecteur eu égard aux constituants de grande taille séparés par voie acoustique et aux constituants de petite taille séparés par voie acoustique.

16. Procédé selon la revendication 1, dans lequel l'évaluation du degré de dissociation comprend la détermination de la proportion de cellules libres et d'agrégats cellulaires présents dans les constituants de grande taille séparés par voie acoustique.

17. Système de traitement d'échantillon biologique, comprenant :
un dissociateur permettant de dissocier un échantillon biologique, et
un concentrateur acoustique comprenant un orifice d'entrée et un orifice de sortie couplés par voie fluidique au dissociateur et conçu pour séparer par voie acoustique les constituants de grande taille des constituants de petite taille présents dans un échantillon biologique dissocié ; et
**caractérisé en ce que** le système comprend en outre :
un détecteur placé au niveau d'un orifice de sortie du concentrateur acoustique et conçu pour évaluer, par contrôle à rétroaction, le degré de dissociation d'un échantillon séparé par voie acoustique,
ledit concentrateur acoustique étant conçu pour reconduire les constituants de grande taille séparés par voie acoustique vers le dissociateur par le biais de l'orifice de sortie compte tenu du contrôle à rétroaction
